(19) 

**Europäisches Patentamt**
**European Patent Office**
**Office européen des brevets**

(11) **EP 4 708 376 A1**

(12) **EUROPEAN PATENT APPLICATION**
published in accordance with Art. 153(4) EPC

(43) Date of publication:
**11.03.2026 Bulletin 2026/11**

(21) Application number: **24908186.0**

(22) Date of filing: **20.12.2024**

(51) International Patent Classification (IPC):
$H01M\ 4/131^{(2010.01)}$ $\quad H01M\ 4/525^{(2010.01)}$
$H01M\ 4/505^{(2010.01)}$ $\quad H01M\ 4/36^{(2006.01)}$
$H01M\ 10/0525^{(2010.01)}$ $\quad H01M\ 4/38^{(2006.01)}$
$H01M\ 4/587^{(2010.01)}$ $\quad H01M\ 4/1391^{(2010.01)}$
$H01M\ 4/02^{(2006.01)}$

(52) Cooperative Patent Classification (CPC):
H01M 4/525; H01M 4/131; H01M 4/364;
H01M 4/366; H01M 4/483; H01M 4/505;
H01M 4/587; H01M 4/628; H01M 10/0525;
H01M 2004/021; H01M 2004/028; Y02E 60/10

(86) International application number:
**PCT/KR2024/020867**

(87) International publication number:
**WO 2025/135904 (26.06.2025 Gazette 2025/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.12.2023 KR 20230188990**
**30.10.2024 KR 20240151560**

(71) Applicant: **LG Energy Solution, Ltd.**
**Seoul 07335 (KR)**

(72) Inventors:
• **BAEK, So Ra**
**Daejeon 34122 (KR)**
• **JU, Ji Young**
**Daejeon 34122 (KR)**
• **CHO, Hyeon Jin**
**Daejeon 34122 (KR)**
• **YOO, Dong Wan**
**Daejeon 34122 (KR)**
• **JO, Chi Ho**
**Daejeon 34122 (KR)**

(74) Representative: **Hoffmann Eitle**
**Patent- und Rechtsanwälte PartmbB**
**Arabellastraße 30**
**81925 München (DE)**

(54) **POSITIVE ELECTRODE, MANUFACTURING METHOD THEREOF, AND LITHIUM SECONDARY BATTERY**

(57) A positive electrode includes a positive electrode active material layer including a first positive electrode active material and a second positive electrode active material having different average particle diameters from each other. An average particle diameter $D_{50}$ of the first positive electrode active material is larger than an average particle diameter $D_{50}$ of the second positive electrode active material, the first positive electrode active material and the second positive electrode active material include single-particle type particles, and an interface resistance of the positive electrode having an SOC of 50% measured in a coin half-cell manufactured using the positive electrode is $6.5\,\Omega$ to $8.5\,\Omega$, and an interface resistance of the positive electrode having an SOC of 10% measured in a coin half-cell manufactured using the positive electrode is $15\,\Omega$ to $19\,\Omega$.

EP 4 708 376 A1

[FIG. 1]

```
                    ┌─────────────────────┐
                    │        START        │
                    └─────────────────────┘
                               │
                               ▼
        ┌──────────────────────────────────────────┐
        │ performing a first rinsing by mixing a    │
        │ first positive electrode active material  │ ～ S1
        │ in distilled water, followed by drying    │
        └──────────────────────────────────────────┘
                               │
                               ▼
        ┌──────────────────────────────────────────┐
        │ performing a second rinsing by mixing a   │
        │ second positive electrode active material │ ～ S2
        │ in distilled water, followed drying       │
        └──────────────────────────────────────────┘
                               │
                               ▼
        ┌──────────────────────────────────────────┐
        │ forming a positive electrode active       │
        │ material layer including the first        │ ～ S3
        │ positive electrode active material and    │
        │ the second positive electrode active      │
        │ material                                  │
        └──────────────────────────────────────────┘
                               │
                               ▼
                    ┌─────────────────────┐
                    │         END         │
                    └─────────────────────┘
```

**Description**

## TECHNICAL FIELD

### Cross-reference to Related Applications

This application claims the benefit of Korean Patent Application No. 10-2023-0188990, filed on December 21, 2023, and Korean Patent Application No. 10-2024-0151560, filed on October 30, 2024, in the Korean Intellectual Property Office, the disclosure of which is incorporated herein in its entirety by reference.

## TECHNICAL FIELD

The present invention relates to a positive electrode, a method of manufacturing the same, and a lithium secondary battery, and more particularly, to a positive electrode having improved capacity, resistance characteristics, and high-temperature life characteristics, a method of manufacturing the same, and a lithium secondary battery.

## BACKGROUND ART

In recent years, with the rapid proliferation of electronic devices using batteries such as mobile phones, laptops, computers, and electric vehicles, the demand for small, lightweight, and relatively high-capacity secondary batteries has rapidly increased. Especially, lithium secondary batteries are gaining attention as a power source for mobile devices due to their light weight and high energy density. Thus, many researches and developments are progressing to improve the performance of lithium secondary batteries.

## DISCLOSURE OF THE INVENTION

## TECHNICAL PROBLEM

The present invention provides a positive electrode, which adopts a low-efficiency positive electrode material that addresses the shortcoming of a negative electrode material suffering from a high irreversible capacity loss during the initial charge and discharge, so as to achieve excellent resistance characteristics and high-temperature life characteristics, as well as excellent capacity characteristics, a method of manufacturing the same, and a lithium secondary battery.

## TECHNICAL SOLUTION

[1] The present invention provides a positive electrode including: a positive electrode active material layer including a first positive electrode active material and a second positive electrode active material having different average particle diameters from each other, in which an average particle diameter $D_{50}$ of the first positive electrode active material is larger than an average particle diameter $D_{50}$ of the second positive electrode active material, the first positive electrode active material and the second positive electrode active material include single-particle type particles, and an interface resistance of the positive electrode having an SOC of 50% measured in a coin half-cell manufactured using the positive electrode is 6.5 $\Omega$ to 8.5 Q, and an interface resistance of the positive electrode having an SOC of 10% measured in a coin half-cell manufactured using the positive electrode is 15 $\Omega$ to 19 Q.
[2] The present invention provides the positive electrode according to [1], in which the first positive electrode active material includes a first lithium transition metal oxide represented by Formula 1:

$$\text{(Formula 1)} \qquad Li_{1+a1}Ni_{x1}Co_{y1}Mn_{z1}Al_{w1}M^1_{v1}O_2$$

In Formula 1, a1, x1, y1, z1, w1, and v1 satisfy $0 \leq a1 \leq 0.3$, $0.82 \leq x1 < 1.0$, $0 < y1 \leq 0.2$, $0 < z1 \leq 0.2$, $0 < w1 \leq 0.2$, $0 \leq v1 \leq 0.1$, respectively, and $M^1$ is at least one doping element selected from the group consisting of W, Cu, Fe, V, Cr, Ti, Zr, Zn, Al, In, Ta, Y, In, La, Sr, Ga, Sc, Gd, Sm, Ca, Ce, Nb, Mg, B, and Mo.
[3] The present invention provides the positive electrode according to [1] or [2], in which the second positive electrode active material includes a second lithium transition metal oxide represented by Formula 2:

$$\text{(Formula 2)} \qquad Li_{1+a2}Ni_{x2}Co_{y2}Mn_{z2}Al_{w2}M^2_{v2}O_2$$

In Formula 2, a2, x2, y2, z2, w2, and v2 satisfy $0 \leq a2 \leq 0.3$, $0.82 \leq x2 < 1.0$, $0 < y2 \leq 0.2$, $0 < z2 \leq 0.2$, $0 < w2 \leq 0.2$, $0 \leq v2 \leq 0.1$, respectively, and $M^2$ is at least one doping element selected from the group consisting of W, Cu, Fe, V, Cr, Ti, Zr, Zn, Al, In, Ta, Y, In, La, Sr, Ga, Sc, Gd, Sm, Ca, Ce, Nb, Mg, B, and Mo.

[4] The present invention provides the positive electrode according to at least one of [1] to [3], in which the first positive electrode active material has an average particle diameter $D_{50}$ of 6 $\mu$m to 12 $\mu$m.

[5] The present invention provides the positive electrode according to at least one of [1] to [4], in which the second positive electrode active material has an average particle diameter $D_{50}$ of 1.5 $\mu$m to 5 $\mu$m.

[6] The present invention provides the positive electrode according to at least one of [1] to [5], in which the first positive electrode active material includes a first lithium transition metal oxide, and a first coating layer positioned on a surface of the first lithium transition metal oxide particles and containing 1.5 mol% to 5 mol% of cobalt (Co).

[7] The present invention provides the positive electrode according to at least one of [1] to [6], in which the second positive electrode active material includes a second lithium transition metal oxide, and a second coating layer positioned on a surface of the second lithium transition metal oxide particles and containing 0.2 mol% to 2.5 mol% of cobalt (Co).

[8] The present invention provides the positive electrode according to at least one of [1] to [7], in which the first positive electrode active material and the second positive electrode active material are included in a weight ratio of 80:20 to 40:60.

[9] The present invention provides a positive electrode including: a positive electrode active material layer including a first positive electrode active material and a second positive electrode active material having different average particle diameters, in which the average particle diameter $D_{50}$ of the first positive electrode active material is larger than the average particle diameter $D_{50}$ of the second positive electrode active material, the first positive electrode active material and the second positive electrode active material include single-particle type particles, and an IRR value is 96 to 166, as defined by Equation 1:

$$(\text{Equation } 1)$$

$$IRR = R_{CT50} \times R_{CT10}$$

In Equation 1, $R_{CT50}$ is a dimensionless number of an interface resistance (unit: $\Omega$) of the positive electrode having an SOC of 50% measured in a coin half-cell manufactured using the positive electrode, and $R_{CT10}$ is a dimensionless number of an interface resistance (unit: $\Omega$) of the positive electrode having an SOC of 10% measured in a coin half-cell manufactured using the positive electrode.

[10] The present invention provides a lithium secondary battery including: an electrode assembly including the positive electrode according to any one of [1] to [9], and a negative electrode; an electrolyte; and a battery case in which the electrode assembly and the electrolyte are accommodated, in which the negative electrode includes a silicon-based negative electrode active material.

[11] The present invention provides the lithium secondary battery according to [10], in which the negative electrode further includes a carbon-based negative electrode active material, and the silicon-based negative electrode active material and the carbon-based negative electrode active material are included in a weight ratio of 1:99 to 30:70.

[12] The present invention provides a method of manufacturing a positive electrode, the method including: (S1) performing a first rinsing by mixing a first positive electrode active material in distilled water, followed by drying; (S2) performing a second rinsing by mixing a second positive electrode active material in distilled water, followed drying; and (S3) forming a positive electrode active material layer including the first positive electrode active material and the second positive electrode active material, in which the first rinsing is performed at a higher temperature than the second rinsing, an average particle diameter $D_{50}$ of the first positive electrode active material is larger than an average particle diameter $D_{50}$ of the second positive electrode active material, the first positive electrode active material and the second positive electrode active material include single-particle type particles, and an interface resistance of the positive electrode having an SOC of 50% measured in a coin half-cell manufactured using the positive electrode is 6.5 $\Omega$ to 8.5 $\Omega$, and an interface resistance of the positive electrode having an SOC of 10% measured in a coin half-cell manufactured using the positive electrode is 15 $\Omega$ to 19 $\Omega$.

[13] The present invention provides the method according to [12], in which the first rinsing is performed at 20 °C to 40 °C.

[14] The present invention provides the method according to [12] or [13], in which the first rinsing is performed at 3 °C to 18 °C.

[15] The present invention provides the method according to at least one of [12] to [14], in which the first rinsing is performed by mixing the first positive electrode active material in a content of 50 wt% to 70 wt% based on the total weight of distilled water.

[16] The present invention provides the method according to at least one of [12] to [15], in which the second rinsing is performed by mixing the second positive electrode active material in a content of 65 wt% to 85 wt% based on the total weight of distilled water.

[17] The present invention provides the method according to at least one of [12] to [16], in which the first positive electrode active material includes a first lithium transition metal oxide represented by Formula 1:

$$\text{(Formula 1)} \qquad Li_{1+a1}Ni_{x1}Co_{y1}Mn_{z1}Al_{w1}M^1_{v1}O_2$$

In Formula 1, a1, x1, y1, z1, w1, and v1 satisfy $0 \le a1 \le 0.3$, $0.82 \le x1 < 1.0$, $0 < y1 \le 0.2$, $0 < z1 \le 0.2$, $0 < w1 \le 0.2$, $0 \le v1 \le 0.1$, respectively, and $M^1$ is at least one doping element selected from the group consisting of W, Cu, Fe, V, Cr, Ti, Zr, Zn, Al, In, Ta, Y, In, La, Sr, Ga, Sc, Gd, Sm, Ca, Ce, Nb, Mg, B, and Mo.

[18] The present invention provides the method according to at least one of [12] to [17], in which the second positive electrode active material includes a second lithium transition metal oxide represented by Formula 2

$$\text{(Formula 2)} \qquad Li_{1+a2}Ni_{x2}Co_{y2}Mn_{z2}Al_{w2}M^2_{v2}O_2$$

In Formula 2, a2, x2, y2, z2, w2, and v2 satisfy $0 \le a2 \le 0.3$, $0.82 \le x2 < 1.0$, $0 < y2 \le 0.2$, $0 < z2 \le 0.2$, $0 < w2 \le 0.2$, $0 \le v2 \le 0.1$, respectively, and $M^2$ is at least one doping element selected from the group consisting of W, Cu, Fe, V, Cr, Ti, Zr, Zn, Al, In, Ta, Y, In, La, Sr, Ga, Sc, Gd, Sm, Ca, Ce, Nb, Mg, B, and Mo.

[19] The present invention provides the method according to at least one of [12] to [16], in which the first positive electrode active material includes a first lithium transition metal oxide, and a first coating layer containing cobalt (Co) on a surface of the first lithium transition metal oxide particles, and the second positive electrode active material includes a second lithium transition metal oxide, and a second coating layer containing cobalt (Co) on a surface of the second lithium transition metal oxide particles, wherein the first coating layer has a content of cobalt (Co) larger than that in the second coating layer.

[20] The present invention provides the method according to [19], in which an amount of cobalt (Co) in the first coating layer is 1.5 mol% to 5 mol%, and an amount of cobalt (Co) in the second coating layer is 0.2 mol% to 2.5 mol%.

## ADVANTAGEOUS EFFECTS

According to the present invention, since the bimodal positive electrode active material is included and the interfacial resistance of the positive electrode satisfies a specific range, it is possible to supplement the shortcoming of irreversible capacity loss of the negative electrode without any separate sacrificial positive electrode material, thereby providing excellent capacity characteristics and life characteristics and improving resistance characteristics. In addition, the positive electrode according to the present invention may reduce gas generation due to lithium byproduct generation during high-temperature storage, and thus a lithium secondary battery including the positive electrode according to the present invention may have excellent high-temperature life characteristics.

## BRIEF DESCRIPTION OF THE DRAWINGS

The following drawings attached hereto exemplify embodiments of the present invention and serve to further understand the technical idea of the present invention together with the detailed description of the disclosure to be described later. Therefore, the present invention should not be construed as being limited to the matters illustrated in the drawings.

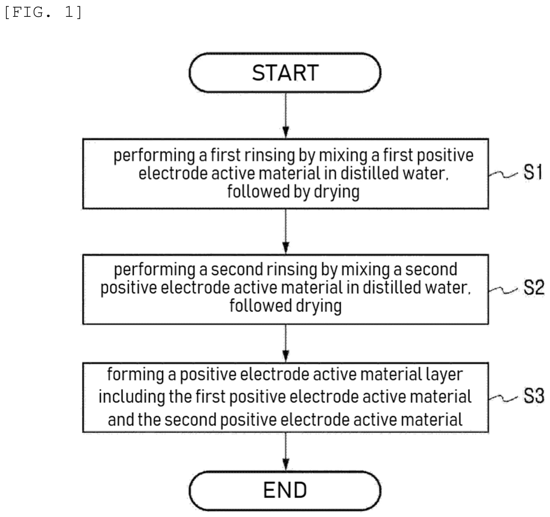

FIG. 1 is a flowchart of a manufacturing method of a positive electrode active material according to one embodiment of the present invention.

## BEST MDOE FOR CARRYING OUT THE INVENTION

Hereinafter, the present invention will be described in more detail.

Words and terms used in the detailed description and the claims herein should not be interpreted to be limited to their usual or dictionary meanings, but should be interpreted to have meanings and concepts that correspond to the technical idea of the present invention in compliance with the principle that inventors may appropriately define terms and concepts for the purpose of best describing the present invention.

The terms used herein are only used to describe embodiments and are not intended to limit the present invention. Singular expressions include plural expressions unless the context clearly indicates otherwise.

As used herein, it should be understood that the terms "comprise," "include," and "have" are intended to specify the presence of a feature, number, step, component, or combination thereof, but do not exclude in advance the possibility of the presence or addition of one or more other features, numbers, steps, components, or combinations thereof.

As used herein, the term "single-particle type particle" indicates a particle formed by aggregation of 30 or fewer sub-particles. Each "sub-particle" unit constituting the single particle type particles is referred to as a "nodule". The single particle type particle includes "single particle" formed of a single nodule, and "quasi-single particle" is a composite formed of 2 to 30 nodules.

As used herein, the term "nodule" indicates a sub-particle unit body constituting a single particle and a quasi-single particle, wherein the nodule may be a single crystal lacking any crystalline grain boundaries, or may be a polycrystal in which grain boundaries are not present when observed in a field of view of 5000× to 20000× using a scanning electron microscope (SEM).

As used herein, the term "secondary particle" indicates a particle formed by aggregation of more than 30 sub-particles. To distinguish the sub-particle constituting the single particle type particle above, each sub-particle unit constituting the secondary particle is referred to as a "primary particle".

In the present invention, the term "particle" may include any one or all of a single particle, a pseudo-single particle, a primary particle, a nodule, and a secondary particle.

In the present invention, the term "average particle diameter $D_{50}$" refers to a particle size based on 50% of the volume cumulative particle size distribution of positive electrode active material powder, and may be measured using a laser diffraction method. For example, the average particle size $D_{50}$ may be measured by dispersing the positive electrode active material powder in a dispersant, introducing the dispersion into a commercially available laser diffraction particle size measurement device (*e.g.,* Microtrac MT 3000), irradiating the dispersion with ultrasonic waves of about 28 kHz at a power of 60 W, obtaining a volume accumulation particle size distribution graph, and then finding the particle size corresponding to 50% of the volume accumulation.

In the present invention, the term "interfacial resistance of the positive electrode with state of charge (SOC) of 50% or SOC of 10%" refers to a resistance measured at the interface between the positive electrode current collector and the positive electrode active material layer in the positive electrode with SOC of 50% or SOC of 10%. Specifically, in the present invention, the "interfacial resistance of the positive electrode with SOC of 50% or SOC of 10%" may be measured using a Biologic VMP3 device (in a range of 100 kHz to 10 mHz at 25°C) for each coin half-cell manufactured by interposing a separator between the positive electrode according to the present invention and the lithium metal counter electrode, and injecting an electrolyte, which is then subjected to two cycles each of which includes charging under conditions of constant current (CC) /constant voltage (CV), 0.1C, 4.2V, 0.05C cut at 25°C and discharging at CC, 0.1C, 3.0V, and thereafter charged to SOC 50% or SOC 10%.

Carbon-based materials such as graphite are mainly used as negative electrode materials for lithium secondary batteries. However, the carbon-based materials have a low capacity per unit mass, which makes it difficult to achieve the high capacity of lithium secondary batteries. Accordingly, as non-carbon-based negative electrode materials that exhibit the high capacity as compared to the carbon-based materials, materials such as silicon, tin, and oxides thereof, which form an inter-metallic compound with lithium, are being developed and used. However, these negative electrode materials suffer from a drastic irreversible capacity loss during the initial charge/discharge.

Under the circumstances, methods have been researched and proposed to compensate for the irreversible capacity loss of the negative electrode, by using materials that may serve as a lithium ion supply source or storage and become electrochemically active after a first cycle without degrading the performance of a battery itself, as the positive electrode material. For example, there is a method using lithium nickel-based oxides such as $Li_2NiO_2$ for the positive electrode, as a sacrificial positive electrode material or an over-discharge inhibitor.

However, most of the lithium nickel-based oxides are expensive, and generate a large amount of lithium by-products, which increases the amount of gas generated. Thus, an alternative method is required.

In order to overcome the problems, the present invention provides, according to one embodiment, a positive electrode having excellent resistance characteristics and high-temperature life characteristics along with improved capacity characteristics by introducing a low-efficiency positive electrode material, a method of manufacturing the same, and a lithium secondary battery.

In order to develop a high-capacity cell, the silicon-based negative electrode material with a high capacity may be used, but the silicon-based negative electrode material has a low charge and discharge efficiency, which results in a high lithium ion loss rate due to an irreversible reaction. Therefore, as the charge and discharge are repeated, the loss of lithium in the positive electrode active material increases, which may rapidly reduce the capacity of the battery during the charge and discharge, and lead to the collapse of the positive electrode active material structure.

To solve the problem, when using a positive electrode active material that is a single-particle type particle, it is possible to implement a low-efficiency positive electrode active material, which is capable of providing lithium to a silicon-based negative electrode active material during initial charge and discharge, so that even when irreversibility occurs in which lithium ions desorbed from the positive electrode active material are inserted into the negative electrode active material and then not desorbed, it is possible to suppress or prevent deterioration of the life characteristics of the battery.

However, when using a positive electrode active material in the form of a single-particle type particle, there is a problem in that the lithium diffusion path becomes longer than when using a lithium nickel oxide in the form of a secondary particle, which reduces the mobility of lithium ions and thus reduces the resistance and capacity characteristics.

Therefore, the inventors of the present invention provide a positive electrode having excellent life characteristics by preventing or suppressing lithium ion loss due to an irreversible reaction of a silicon-based negative electrode active material, thereby preventing or suppressing degradation of the resistance characteristics of a battery, and having high energy density. Specifically, in the present invention, the positive electrode, a lithium secondary battery including the same, and a method for manufacturing the same are provided, which can improve the resistance characteristics of the battery while having excellent life characteristics, by using a single-particle type positive electrode active material having a bimodal particle size distribution and by using a positive electrode in which the interfacial resistance of the positive electrode is controlled within a specific range. And, in the present invention, the positive electrode, a lithium secondary battery including the same, and a method for manufacturing the same are provided, which have excellent high-temperature life characteristics by minimizing gas generation due to the generation of lithium by-products during high-temperature storage because the positive electrode does not contain a separate excess lithium material such as a conventional sacrificial cathode material, and have excellent capacity characteristics by implementing high energy density.

Hereinafter, the present invention will be described in more detail.

The positive electrode, the method of manufacturing the positive electrode, and the lithium secondary battery according to the present invention include at least one of the following disclosed configurations, and may include any combination between technically possible configurations among the following configurations.

## **Positive Electrode**

The positive electrode according to the present invention includes a positive electrode active material layer including a first positive electrode active material and a second positive electrode active material having different average particle diameters $D_{50}$. The average particle diameter $D_{50}$ of the first positive electrode active material is larger than the average particle diameter $D_{50}$ of the second positive electrode active material, and the first positive electrode active material and the second positive electrode active material include single-particle type particles. An interface resistance of the positive electrode having an SOC of 50% measured in a coin half-cell manufactured using the positive electrode is 6.5 $\Omega$ to 8.5 $\Omega$, and an interface resistance of the positive electrode having an SOC of 10% measured in a coin half-cell manufactured using the positive electrode is 15 $\Omega$ to 19 $\Omega$.

The positive electrode includes a positive electrode active material layer. Specifically, the positive electrode may include a positive electrode current collector, and a positive electrode active material layer disposed on the positive electrode current collector.

As the positive electrode current collector, various positive electrode current collectors used in the relevant technical field may be used. Examples of the positive electrode current collector include stainless steel, aluminum, nickel, titanium, calcined carbon, or aluminum or stainless steel surface-treated with carbon, nickel, titanium, silver, or the like. The positive electrode current collector may typically have a thickness of about 3 $\mu$m to 500 $\mu$m, and fine unevenness may be formed on the surface of the positive electrode current collector to strengthen the bonding strength of the positive electrode active material. The positive electrode current collector may be used in various forms, such as a film, a sheet, a foil, a net, a porous body, a foam, a non-woven fabric, or the like.

The positive electrode active material layer may be positioned on the positive electrode current collector, may be positioned on one side of the positive electrode current collector, or may be positioned on both sides thereof. The positive electrode active material layer may be a single layer or a multilayer structure of two or more layers.

The positive electrode active material layer includes a first positive electrode active material and a second positive electrode active material.

The first positive electrode active material and the second positive electrode active material have different average particle diameters $D_{50}$. Specifically, the average particle diameter $D_{50}$ of the first positive electrode active material is larger than the average particle diameter $D_{50}$ of the second positive electrode active material. Accordingly, when the electrode is rolled, the second positive electrode active material having a relatively smaller particle diameter is filled in the pores of the first positive electrode active material having a relatively larger particle diameter, thereby increasing the electrode density, and implementing a high energy density, which may achieve high-capacity characteristics.

The first positive electrode active material includes single-particle type particles. When the first positive electrode active material includes single-particle type particles, due to the large size of the single-particle type particle size, the diffusion distance of lithium is long, which increases diffusion resistance, so that the positive electrode may have low efficiency, which may be balanced with the negative electrode, when applying a silicon-based negative electrode active material. Accordingly, the problem of lithium ion loss due to irreversible capacity when applying a conventional silicon-based negative electrode active material may be solved, and the lithium precipitation phenomenon on the surface of the negative electrode may be prevented, so that the life characteristics of a lithium secondary battery applying the positive electrode according to the present invention may be improved. In addition, when applying the first positive electrode active material which is a single-particle type particle, unlike when using a conventional sacrificial positive electrode material, the generation of lithium byproducts due to the sacrificial positive electrode material during charge and discharge may be prevented or suppressed, so that the high-temperature storage characteristics and the high-temperature life characteristics may be superior to those when using a conventional sacrificial positive electrode material.

The first positive electrode active material may include a first lithium transition metal oxide containing nickel (Ni), cobalt (Co), manganese (Mn), and aluminum (Al). Unlike ternary lithium transition metal oxides containing nickel, cobalt, and manganese, the first positive electrode active material according to the present invention may be structurally stable by further including aluminum, which has a stronger bonding strength with oxygen atoms, and thus may be electrochemically stable at high potentials by suppressing cation mixing during charge and discharge, thereby further improving thermal stability and capacity characteristics.

In addition, the first positive electrode active material may include a first lithium transition metal oxide containing nickel at 82 mol% or more among all metals excluding lithium. In this case, high-capacity characteristics of a lithium secondary battery may be implemented.

Specifically, the first positive electrode active material may include a first lithium transition metal oxide represented by Formula 1:

$$\text{(Formula 1)} \qquad Li_{1+a1}Ni_{x1}Co_{y1}Mn_{z1}Al_{w1}M^1{}_{v1}O_2$$

In Formula 1, $M^1$ may be at least one doping element selected from the group consisting of W, Cu, Fe, V, Cr, Ti, Zr, Zn, Al, In, Ta, Y, In, La, Sr, Ga, Sc, Gd, Sm, Ca, Ce, Nb, Mg, B, and Mo. Preferably, $M^1$ may be at least one doping element selected from the group consisting of W, Y, Ba, Ca, Ti, Mg, Ta, and Nb.

The "1+a1" may refer to a molar ratio of lithium (Li) in the first lithium transition metal oxide, and may be $0 \leq a1 \leq 0.3$, or $0 \leq a1 \leq 0.2$, or $0 \leq a1 \leq 0.15$, or $0 \leq a1 \leq 0.1$. When the above range is satisfied, a balance between the remarkable effect of improving the capacity characteristics of the first positive electrode active material according to the Li content control and the sinterability during the manufacture of the first positive electrode active material may be achieved.

The "x1" may refer to a molar ratio of nickel among the total metal excluding lithium in the first lithium transition metal oxide, and may be $0.82 \leq x1 < 1$, $0.85 \leq x1 < 1$, $0.90 \leq x1 < 1$, or $0.92 \leq x1 < 1$. When the above range is satisfied, a nickel content sufficient to contribute to charge/discharge in the lithium transition metal oxide is secured, thereby promoting high capacity.

The "y1" may refer to a molar ratio of cobalt among the total metal excluding lithium in the first lithium transition metal oxide, and may be $0 < y1 \leq 0.2$, $0 < y1 \leq 0.18$, $0.01 \leq y1 \leq 0.15$, $0.03 \leq y1 \leq 0.12$, or $0.05 \leq y1 \leq 0.10$. When the above range is satisfied, good resistance characteristics and output characteristics may be implemented while having cost advantages by including a small amount of cobalt.

The "z1" may refer to a molar ratio of Mn among the total metal excluding lithium in the first lithium transition metal oxide, and may be $0 < z1 \leq 0.2$, $0 < z1 \leq 0.18$, $0.01 \leq z1 \leq 0.15$, or $0.03 \leq z1 \leq 0.10$. When the above range is satisfied, the structural stability of the lithium transition metal oxide may be improved.

The "w1" may refer to a molar ratio of Al among the total metal excluding lithium in the first lithium transition metal oxide, and may be $0 < w1 \leq 0.2$, $0 < w1 \leq 0.18$, $0.01 \leq w1 \leq 0.15$, or $0.03 \leq w1 \leq 0.10$. When the above range is satisfied, the thermal stability of lithium transition metal oxide may be improved due to the high bonding strength with oxygen.

The "v1" may refer to a molar ratio of $M^1$ among the total metal excluding lithium in the first lithium transition metal oxide, and may be $0 \leq v1 \leq 0.1$, $0 \leq v1 \leq 0.08$, or $0 \leq v1 \leq 0.05$.

The first positive electrode active material may include a first lithium transition metal oxide and a first coating layer positioned on the surface of the first lithium transition metal oxide particles, and the first coating layer may include cobalt (Co). By the first coating layer, contact between the lithium transition metal oxide and the electrolyte is blocked, so that occurrence of electrolyte side reactions is suppressed, thereby suppressing surface structure degradation of the lithium transition metal oxide that may occur during a charge and discharge process, and thus improving high-temperature life and suppressing increase in resistance.

The first coating layer may include cobalt (Co) in an amount of 1.5 mol% to 5 mol%, 2 mol% to 4.5 mol%, 2.3 mol% to 4 mol%, 2.5 mol% to 3.5 mol%, or 2.7 mol% to 3.3 mol%. When the first coating layer includes cobalt in the above range, by including a greater amount of cobalt than a second coating layer (to be described later) included in the second positive electrode active material, the positive electrode interfacial resistance at SOC 50% of a coin half-cell including the positive electrode according to the present invention may be lowered, thereby preventing the problem of increasing the initial resistance at charge and discharge due to a decrease in ion mobility when using the positive electrode active material that is a single-particle type particle, and thus, improving the life characteristics and high temperature life characteristics of the battery.

The first coating layer may be formed entirely or partially on the entire surface of the first lithium transition metal oxide particle. Specifically, when the first coating layer is formed partially on the surface of the first lithium transition metal oxide particle, it may be formed on an area of 5% or more and less than 100%, preferably, 20% or more and less than 100% of the total surface area of the surface of the first lithium transition metal oxide.

The average particle diameter $D_{50}$ of the first positive electrode active material may be 6 μm to 12 μm. Specifically, the average particle size of the first positive electrode active material may be 6 μm or more, 6.2 μm or more, 6.4 μm or more, 6.6 μm or more, 6.8 μm or more, 7 μm or more, 7.2 μm or more, 7.4 μm or more, 7.6 μm or more, 7.8 μm or more, 8 μm or more, 8.2 μm or more, or 8.4 μm or more, and may be 12 μm or less, 11.8 μm or less, 11.6 μm or less, 11.4 μm or less, 11.2 μm or less, 11 μm or less, 10.8 μm or less, 10.6 μm or less, 10.4 μm or less, 10.2 μm or less, 10 μm or less, 9.8 μm or less, 9.6 μm or less, 9.4 μm or less, 9.2 μm or less, 9 μm or less, 8.8 μm or less, or 8.6 μm or less. For example, the average particle size of the first positive electrode active material may be 6 μm to 12 μm, 7.4 μm to 11 μm, 8 μm to 9.6 μm, or 8.2 μm to 9 μm. When the above range is satisfied, the rolling density of the positive electrode material may be increased, and thus, the electrode density may be improved during electrode manufacturing, thereby implementing excellent energy density.

The first positive electrode active material may be included in an amount of 20 wt% to 80 wt%, preferably, 30 wt% to 70 wt%, and more preferably 40 wt% to 60 wt% based on the total weight of the positive electrode active material layer. When the above range is satisfied, the rolling density may be improved, thereby achieving high energy density.

Meanwhile, the second positive electrode active material includes single-particle type particles. When the second positive electrode active material includes single-particle type particles, due to the large size of the single-particle type particle size, the diffusion distance of lithium is long, which increases diffusion resistance, so that the positive electrode may have low efficiency, which may be balanced with the negative electrode in terms of efficiency, when applying a silicon-based negative electrode active material. Accordingly, the problem of lithium ion loss due to irreversible capacity when applying a conventional silicon-based negative electrode active material may be solved, and the lithium precipitation phenomenon on the surface of the negative electrode may be prevented, so that the life characteristics of a lithium secondary battery applying the positive electrode according to the present invention may be improved. In addition, when applying the second positive electrode active material which is a single-particle type particle, unlike when using a conventional sacrificial positive electrode material, the generation of lithium byproducts due to the sacrificial positive electrode material during charge and discharge may be prevented or suppressed, so that the high-temperature storage characteristics and the high-temperature life characteristics may be superior to those when using a conventional sacrificial positive electrode material.

The second positive electrode active material may include a second lithium transition metal oxide containing nickel (Ni), cobalt (Co), manganese (Mn), and aluminum (Al). Unlike ternary lithium transition metal oxides containing nickel, cobalt, and manganese, the first positive electrode active material according to the present invention may be structurally stable by further including aluminum, which has a stronger bonding strength with oxygen atoms, and thus may be electrochemically stable at high potentials by suppressing cation mixing during charge and discharge, thereby further improving thermal stability and capacity characteristics.

In addition, the second positive electrode active material may include a second lithium transition metal oxide containing nickel at 82 mol% or more among all metals excluding lithium. In this case, high-capacity characteristics of a lithium secondary battery may be implemented.

Specifically, the second positive electrode active material may include a second lithium transition metal oxide represented by Formula 2:

$$\text{(Formula 2)} \qquad Li_{1+a2}Ni_{x2}Co_{y2}Mn_{z2}Al_{w2}M^2_{v2}O_2$$

In Formula 2, $M^2$ may be at least one doping element selected from the group consisting of W, Cu, Fe, V, Cr, Ti, Zr, Zn, Al, In, Ta, Y, In, La, Sr, Ga, Sc, Gd, Sm, Ca, Ce, Nb, Mg, B, and Mo. For example, $M^2$ may be at least one doping element selected from the group consisting of W, Y, Ba, Ca, Ti, Mg, Ta, and Nb.

The "1+a2" may refer to a molar ratio of lithium (Li) in the second lithium transition metal oxide, and may be $0 \leq a2 \leq 0.3$, $0 \leq a2 \leq 0.2$, $0 \leq a2 \leq 0.15$, or $0 \leq a2 \leq 0.1$. When the above range is satisfied, a balance between the remarkable effect of improving the capacity characteristics of the second positive electrode active material according to the Li content control and the sinterability during the manufacture of the first positive electrode active material may be achieved.

The "x2" may refer to a molar ratio of nickel among the total metal excluding lithium in the second lithium transition metal oxide, and may be $0.82 \leq x2 < 1$, $0.85 \leq x2 < 1$, $0.90 \leq x2 < 1$, or $0.92 \leq x2 < 1$. When the above range is satisfied, a nickel content sufficient to contribute to charge/discharge in the lithium transition metal oxide is secured, thereby promoting high capacity.

The "y2" may refer to a molar ratio of cobalt among the total metal excluding lithium in the second lithium transition metal oxide, and may be $0 < y2 \leq 0.2$, $0 < y2 \leq 0.18$, $0.01 \leq y2 \leq 0.15$, $0.03 \leq y2 \leq 0.12$, or $0.05 \leq y2 \leq 0.10$. When the above range is satisfied, good resistance characteristics and output characteristics may be implemented while having cost advantages by including a small amount of cobalt.

The "z2" may refer to a molar ratio of Mn among the total metal excluding lithium in the second lithium transition metal oxide, and may be $0 < z2 \leq 0.2$, $0 < z2 \leq 0.18$, $0.01 \leq z2 \leq 0.15$, or $0.03 \leq z2 \leq 0.10$. When the above range is satisfied, the structural stability of the lithium transition metal oxide may be improved.

The "w2" may refer to a molar ratio of Al among the total metal excluding lithium in the second lithium transition metal oxide, and may be $0<w2\leq0.2, 0<w2\leq0.18, 0.01\leq w2\leq0.15$, or $0.03\leq w2\leq0.10$. When the above range is satisfied, the thermal stability of lithium transition metal oxide may be secured due to the high bonding strength with oxygen.

The "v2" may refer to a molar ratio of $M^2$ among the total metal excluding lithium in the second lithium transition metal oxide, and may be $0\leq v2\leq0.1, 0\leq v2\leq0.08$, or $0\leq v2\leq0.05$.

The second positive electrode active material may include a second lithium transition metal oxide and a second coating layer positioned on the surface of the second lithium transition metal oxide particles, and the second coating layer may include cobalt (Co). By the second coating layer, contact between the lithium transition metal oxide and the electrolyte is blocked, so that occurrence of electrolyte side reactions is suppressed, thereby suppressing surface structure degradation of the lithium transition metal oxide that may occur during a charge and discharge process, and thus suppressing increase in resistance and improving high-temperature life.

The amount of cobalt (Co) included in the first coating layer may be greater than the amount of cobalt (Co) included in the second coating layer. In this case, the positive electrode interfacial resistance at SOC 50% of the coin half-cell including the positive electrode according to the present invention may be lowered, so that the increase in initial resistance during charge and discharge due to a decrease in ion mobility when using a positive electrode active material that is a single-particle type particle may be prevented or suppressed, thereby improving the life characteristics and high-temperature life characteristics of the battery, and improving the energy density.

The second coating layer may include cobalt (Co) in an amount of 0.2 mol% to 2.5 mol%, 0.3 mol% to 2 mol%, 0.5 mol% to 1.5 mol%, or 0.7 mol% to 1.3 mol%. When the second coating layer includes cobalt in the above range, by including a less amount of cobalt than the first coating layer described above included in the first positive electrode active material, the positive electrode interfacial resistance at SOC 50% of a coin half-cell including the positive electrode according to the present invention may be lowered, thereby preventing or suppressing the problem of increasing the initial resistance at charge and discharge due to a decrease in ion mobility when using the positive electrode active material that is a single-particle type particle, and thus, improving the life characteristics and high temperature life characteristics of the battery, and improving the energy density.

The second coating layer may be formed entirely or partially on the entire surface of the second lithium transition metal oxide particle. Specifically, when the second coating layer is formed partially on the surface of the second lithium transition metal oxide particle, it may be formed on an area of 5% or more and less than 100%, or, 20% or more and less than 100% of the total surface area of the surface of the second lithium transition metal oxide.

The average particle diameter $D_{50}$ of the second positive electrode active material may be 1.5 $\mu$m to 5 $\mu$m. Specifically, the average particle size of the second positive electrode active material may be 1.5 $\mu$m or more, 1.7 $\mu$m or more, 1.9 $\mu$m or more, 2 $\mu$m or more, 2.2 $\mu$m or more, 2.4 $\mu$m or more, 2.6 $\mu$m or more, 2.8 $\mu$m or more, or 3 $\mu$m or more, and may be 5 $\mu$m or less, 4.8 $\mu$m or less, 4.6 $\mu$m or less, 4.4 $\mu$m or less, 4.2 $\mu$m or less, 4 $\mu$m or less, 3.8 $\mu$m or less, 3.6 $\mu$m or less, 3.4 $\mu$m or less, or 3.2 $\mu$m or less. For example, the average particle size of the second positive electrode active material may be 1.5 $\mu$m to 5 $\mu$m, 2 $\mu$m to 4.5 $\mu$m, or 2.6 $\mu$m to 4.2 $\mu$m, 3 $\mu$m to 4 $\mu$m, or 3 $\mu$m to 3.4 $\mu$m. When the above range is satisfied, the rolling density of the positive electrode material may be increased, and thus, the electrode density may be improved during electrode manufacturing, thereby implementing excellent energy density.

The second positive electrode active material may be included in an amount of 20 wt% to 80 wt%, 30 wt% to 70 wt%, or 40 wt% to 60 wt% based on the total weight of the positive electrode active material layer. When the above range is satisfied, the rolling density may be improved, thereby achieving high energy density.

The first positive electrode active material and the second positive electrode active material may be included in a weight ratio of 80:20 to 40:60, 75:25 to 45:55, 70:30 to 50:50, or 65:45 to 55:45. When the above weight ratio is satisfied, the effect of improving high-temperature life characteristics and resistance characteristics while improving energy density may be maximized.

Meanwhile, when a silicon-based active material is included as the negative electrode active material, the silicon-based active material acts in the discharge terminal voltage range, and at this time, when the discharge terminal resistance of the positive electrode is low, a problem occurs in which lithium is deposited on the surface of the negative electrode due to the difference in resistance between the positive electrode and the negative electrode. Therefore, in order to reduce the discharge terminal resistance difference between the positive electrode and the negative electrode, the discharge terminal resistance of the positive electrode may be increased. However, there is a problem in that when the interfacial resistance of the positive electrode increases in the entire range, the cell resistance increases.

Therefore, the positive electrode according to the present invention solves the above problems by maintaining the interfacial resistance of the positive electrode having an SOC of 50% in a coin half-cell manufactured using the positive electrode, and increasing the interfacial resistance of the positive electrode having an SOC of 10% measured in a coin half-cell manufactured using the positive electrode.

In the coin half-cell manufactured using the positive electrode, the interface resistance of the positive electrode having an SOC of 50% is 6.5 $\Omega$ to 8.5 Q. Specifically, in coin half-cell manufactured using the positive electrode, the interface resistance of the positive electrode having an SOC of 50% may be 6.5 Ω or more, 6.7 Ω or more, 6.9 Ω or more, 7.0 Ω or more, or 7.2 Ω or more, and may be 8.5 Ω or less, 8.3 Ω or less, 8.1 Ω or less, 8.0 Ω or less, 7.8 Ω or less, 7.6 Ω or less, or 7.4 Ω or less. For example, in the coin half-cell manufactured using the positive electrode, the interface resistance of the positive electrode having an SOC of 50% may be 6.5 Ω to 8.5 Ω, 6.7 Ω to 8.0 Ω, or 6.9 Ω to 7.4 Ω. When the above range is satisfied, the interfacial resistance of the positive electrode at an SOC of 50% may be maintained without increasing, so that the overall resistance of the cell does not increase, thereby avoiding the problem of increasing initial resistance during charge and discharge, and thus, improving the life characteristics of the cell.

In addition, in the coin half-cell manufactured using the positive electrode, the interface resistance of the positive electrode having an SOC of 10% is 15 Ω to 19 Ω. Specifically, in the coin half-cell manufactured using the positive electrode, the interface resistance of the positive electrode having an SOC of 10% may be 15 Ω or more, 15.2 Ω or more, 15.4 Ω or more, 15.6 Ω or more, 15.8 Ω or more, 16 Ω or more, 16.2 Ω or more, 16.4 Ω or more, 16.6 Ω or more, 16.8 Ω or more, 17 Ω or more, 17.2 Ω or more, or 17.4 Ω or more, and may be 19 Ω or less, 18.8 Ω or less, 18.6 Ω or less, 18.4 Ω or less, 18.2 Ω or less, 18 Ω or less, 17.8 Ω or less, 17.6 Ω or less. For example, in the positive electrode, the coin half-cell manufactured using the positive electrode, the interface resistance of the positive electrode having an SOC of 10% may be 15 Ω to 19 Ω, 15.2 Ω to 18 Ω, 16 Ω to 17.8 Ω, or 17 Ω to 17.6 Ω. When the above range is satisfied, the resistance difference between the positive electrode and the negative electrode at the discharge end may be reduced, which may suppress the phenomenon of precipitation of lithium ions on the surface of the negative electrode to suppress the degeneration of the negative electrode, thereby solving the problem of deterioration of the cycle characteristics of the battery, preventing the problem of increasing the initial resistance during charge and discharge, and thus, improving the life characteristics of the battery.

At this time, in the coin half-cell, the interface resistance of the positive electrode having an SOC of 50% or 10% may be controlled by the composition of the first positive electrode active material and the second positive electrode active material, the cobalt content of the first coating layer included in the first positive electrode active material and the second coating layer included in the second positive electrode active material, and the rinsing conditions during the production of the first positive electrode active material and the second positive electrode active material.

The positive electrode according to the present invention has an IRR value of 96 to 166, as defined by Equation 1 below. Specifically, the IRR value defined by Equation 1 may be 96 or more, 98 or more, 100 or more, 102 or more, 104 or more, 106 or more, 108 or more, 110 or more, 112 or more, 116 or more, 118 or more, 120 or more, 122 or more, 124 or more, 126 or more, and may be 166 or less, 164 or less, 162 or less, 160 or less, 158 or less, 156 or less, 154 or less, 152 or less, 150 or less, 148 or less, 146 or less, 144 or less, 142 or less, 140 or less, 138 or less, 136 or less, 134 or less, 132 or less, 130 or less, or 128 or less. For example, the IRR value defined by Equation 1 may be 96 to 166, 100 to 140, 104 to 130, 120 to 130, or 124 to 128. When the above IRR range is satisfied, the interfacial resistance of the positive electrode may be controlled in a range such that the resistance of the positive electrode does not increase in the entire region while reducing the difference in discharge terminal resistance between the positive electrode and the negative electrode, so that the high-temperature life characteristics of the lithium secondary battery may be excellent.

$$\text{(Equation 1)}$$

$$IRR = R_{CT50} \times R_{CT10}$$

In Equation 1, $R_{CT50}$ is a dimensionless number of an interface resistance (unit: Ω) of the positive electrode having an SOC of 50% measured in a coin half-cell manufactured using the positive electrode, and $R_{CT10}$ is a dimensionless number of an interface resistance (unit: Ω) of the positive electrode having an SOC of 10% measured in a coin half-cell manufactured using the positive electrode.

The interfacial resistance of the positive electrode having an SOC of 50% measured in a coin half-cell manufactured using the positive electrode in the $R_{CT50}$ may be the same as described above.

The interfacial resistance of the positive electrode having an SOC of 10% measured in a coin half-cell manufactured using the positive electrode in the $R_{CT10}$ may be the same as described above.

Meanwhile, the positive electrode active material layer may optionally further include at least one of a positive electrode conductive material and a positive electrode binder.

The positive electrode conductive material used to impart conductivity to the electrode may be any material that is electrically conductive without causing chemical changes in the battery to be constructed, without any particular limitation. Specific examples include graphite such as natural graphite or artificial graphite; carbon-based materials such as carbon black, acetylene black, Ketjen black, channel black, furnace black, lamp black, thermal black, carbon fiber, and carbon nanotube; metal powder or metal fiber such as copper, nickel, aluminum, and silver; conductive whiskers such as zinc oxide and potassium titanate; conductive metal oxides such as titanium oxide; or conductive polymers such as polyphenylene derivatives, which may be used alone or in mixture of two or more thereof. The positive electrode conductive material may be generally included in an amount of 1 to 30 wt%, 1 to 20 wt%, or 1 to 10 wt% based on the total weight of the positive electrode active material layer.

The positive electrode binder serves to improve adhesion between positive electrode particles and adhesion between the positive electrode and the positive electrode current collector. Specific examples include a fluorine resin binder including polyvinylidene fluoride (PVDF) or polytetrafluoroethylene (PTFE); a rubber binder including styrene butadiene rubber (SBR), acrylonitrile-butadiene rubber, and styrene-isoprene rubber; a cellulose binder including carboxyl methyl cellulose (CMC), starch, hydroxy propyl cellulose, and regenerated cellulose; a polyalcohol binder including polyvinyl alcohol; a polyolefin binder including polyethylene and polypropylene; a polyimide binder; a polyester binder; and a silane binder, and one of these may be used either alone or a mixture of two or more thereof. The positive electrode binder may be included in an amount of 1 to 30 wt%, 1 to 20 wt%, or 1 to 10 wt% based on the total weight of the positive electrode active material layer.

The positive electrode may be manufactured by a method of applying a positive electrode slurry to one side or both sides of a long sheet-shaped positive electrode current collector, and removing the solvent of the positive electrode slurry through a drying process, followed by rolling. Meanwhile, a positive electrode including a non-coated portion may be manufactured by a method of not applying the positive electrode slurry to certain area of the positive electrode current collector, for example, one end of the positive electrode current collector, during the application of the positive electrode slurry.

In addition, the positive electrode slurry may be prepared by dispersing the first positive electrode active material and the second positive electrode active material according to the present invention in a solvent such as dimethyl sulfoxide (DMSO), isopropyl alcohol, N-methylpyrrolidone (NMP), acetone, or water.

Lithium Secondary Battery

Next, a lithium secondary battery according to the present invention is described.

The present invention provides a lithium secondary battery including: an electrode assembly including the above-described positive electrode, and a negative electrode; an electrolyte; and a battery case in which the electrode assembly and the electrolyte are accommodated, in which the negative electrode includes a silicon-based negative electrode active material.

In the following, each component of the lithium secondary battery according to the present invention is described in more detail.

(1) Electrode Assembly

The electrode assembly according to the present invention includes a positive electrode, and a negative electrode, specifically the electrode assembly may include a positive electrode, a negative electrode, and a separator.

Specifically, the electrode assembly may be formed by sequentially stacking the positive electrode, the separator, and the negative electrode, and the positive electrode and the negative electrode may be mutually insulated by the separator.

The types of the electrode assembly may include, but are not limited to, a stack type, a jelly roll type, and a stack and folding type.

Hereinafter, each component of the electrode assembly according to the present invention is described in detail.

1) Positive Electrode

Since the positive electrode is the same as described above, a detailed description is omitted.

2) Negative Electrode

The negative electrode includes a silicon-based negative electrode active material. For example, the negative electrode may include a negative current collector; and a negative electrode active material layer, and the negative electrode active material layer may include a silicon-based negative electrode active material.

The negative electrode current collector is not particularly limited as long as it has high conductivity without causing chemical changes in the battery, and examples thereof include copper, stainless steel, aluminum, nickel, titanium, calcined carbon, copper or stainless steel surface-treated with carbon, nickel, titanium, or silver, and aluminum-cadmium alloy. The negative electrode current collector may typically have a thickness of about 3 $\mu$m to 500 $\mu$m.

In addition, like the positive electrode current collector, the negative electrode current collector may have fine unevenness formed on the surface of the current collector to enhance the bonding strength of the negative electrode active material. For example, the negative electrode current collector may be used in various forms, such as a film, a sheet, a foil, a net, a porous body, a foam, a non-woven body, and the like.

The negative electrode active material layer may be positioned on the negative electrode current collector, or may be positioned on one side or both sides of the negative electrode current collector. The negative electrode active material layer may be a single layer or a multilayer structure of two or more layers.

The silicon-based negative electrode active material may be a particle containing silicon (Si).

The silicon-based negative electrode active material may be $SiO_x$ $(0 \leq x \leq 2)$ , a Si/C composite, or a combination thereof. The $SiO_x(0 \leq x \leq 2)$ may be in a form including Si and $SiO_2$. In other words, the x corresponds to a number ratio of O to Si included in the $SiO_x(0 \leq x \leq 2)$. According to one embodiment, the silicon-based negative electrode active material may be $SiO_x(0 \leq x \leq 2)$, and most preferably SiO.

When the silicon-based negative electrode active material is included in the negative electrode, there is the advantage of having the significantly high charge/discharge capacity, as compared to conventional carbon-based negative electrode active materials. However, the silicon-based negative electrode active material has a problem in that the irreversible capacity is large, which reduces the life characteristics of the battery. However, as described above, the lithium secondary battery according to the present invention solves the problem by including a single-particle type positive electrode active material in the positive electrode and controlling the interfacial resistance of the positive electrode to a specific range.

The silicon-based negative electrode active material may be included in an amount of 1 wt% to 30 wt%, 1 wt% to 25 wt%, or 2 wt% to 20 wt% in the negative electrode active material layer. When the range above is satisfied, the sufficient capacity characteristics may be implemented.

The negative electrode active material layer may further include a carbon-based negative electrode active material as the negative electrode active material.

The carbon-based negative electrode active material may be at least one selected from graphite such as natural graphite and artificial graphite; and carbon-based materials such as carbon black, acetylene black, Ketjen black, channel black, furnace black, lamp black, summer black, carbon fiber, and carbon nanotubes. When the carbon-based negative electrode active material is included, the degradation of the life characteristics caused from the volume change of the silicon-based negative electrode active material during the charge and discharge may be suppressed.

When the carbon-based negative electrode active material is further included, the silicone-based negative electrode active material and the carbon-based negative electrode active material may be included in a weight ratio of 1:99 to 30:70, 1.5:98.5 to 20:80, 2:98 to 15:85, or 2.5:97.5 to 10:90. Within the above range, the superior capacity characteristics and the excellent life characteristics may be achieved.

The carbon-based negative electrode active material may be included in an amount of 70 wt% to 99 wt%, 75 wt% to 99 wt%, or 80 wt% to 98 wt% in the negative electrode active material layer. When the range above is satisfied, the life characteristics of the battery may be improved while achieving the sufficient capacity characteristics.

The negative electrode active material layer may selectively further include a negative electrode conductive agent and a negative electrode binder.

The negative electrode conductive material used to impart conductivity to the electrode, and it is not particularly limited as long as it has an electrically conductive without causing chemical changes in the battery to be constructed. Specific examples include graphite such as natural graphite or artificial graphite; carbon-based materials such as carbon black, acetylene black, Ketjen black, channel black, furnace black, lamp black, thermal black, carbon fiber, and carbon nanotube; metal powder or metal fiber such as copper, nickel, aluminum, and silver; conductive whiskers such as zinc oxide and potassium titanate; conductive metal oxides such as titanium oxide; or conductive polymers such as polyphenylene derivatives, which may be used alone or in mixture of two or more thereof. The negative electrode conductive material may be generally included in an amount of 1 to 30 wt%, 1 to 20 wt%, or 1 to 10 wt% based on the total weight of the negative electrode active material layer.

The negative electrode binder serves to improve the adhesion between negative electrode active material particles and the adhesive strength between the negative electrode active material and the negative electrode current collector. Specific examples include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene monomer rubber (EPDM rubber), sulfonated-EPDM, styrene butadiene rubber (SBR), fluororubber, or various copolymers thereof, which may be used alone or in mixture of two or more thereof. The negative electrode conductive material may be generally included in an amount of1 to 30 wt%, 1 to 20 wt%, or 1 to 10 wt% based on the total weight of the negative electrode active material layer.

3) Separator

Next, the separator separates the negative electrode and the positive electrode from each other while providing a migration pathway for lithium ions, and is not particularly limited as long as it is typically used as a separator in lithium secondary batteries. The separator may be interposed between the positive electrode and the negative electrode.

Specifically, the separator may be a porous polymer film, for example, a porous polymer film made of a polyolefin polymer such as ethylene homopolymer, propylene homopolymer, ethylene/butene copolymer, ethylene/hexene copolymer, and ethylene/methacrylate copolymer, or a laminated structure of two or more layers thereof. In addition, a conventional porous non-woven fabric, for example, a non-woven fabric made of high-melting-point glass fiber, or polyethylene terephthalate fiber may be used. In addition, a coated separator containing a ceramic component or a polymer material may be used to secure heat resistance or mechanical strength.

(2) Electrolyte

The electrolyte according to the present invention includes a lithium salt and an organic solvent.

The lithium salt may be used without any particular limitations as long as it is a compound capable of providing lithium ions used in a lithium secondary battery. The lithium salt may be, specifically, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$. $LiCl$, $LiI$, or $LiB(C_2O_4)_2$. The concentration of the lithium salt may be within the range of 0.1 M to 5.0 M or 0.1 M to 3.0 M. When the concentration of the lithium salt falls in the above range, the electrolyte has the appropriate conductivity and viscosity, so that the excellent electrolyte performance may be achieved, and the lithium ions may effectively migrate.

The organic solvent may include at least one of a cyclic carbonate-based organic solvent, a linear carbonate-based organic solvent, a linear ester-based organic solvent, and a cyclic ester-based organic solvent.

The cyclic carbonate-based organic solvent is a high-viscosity organic solvent, and may include at least one selected from the group consisting of, for example, ethylene carbonate (EC), propylene carbonate (PC), 1,2-butylene carbonate, 2,3-butylene carbonate, 1,2-pentylene carbonate, 2,3-pentylene carbonate, and vinylene carbonate.

In addition, the linear carbonate-based organic solvent is an organic solvent having a low viscosity and a low dielectric constant, and may include at least one selected from the group consisting of, for example, dimethyl carbonate (DMC), diethyl carbonate (DEC), and dipropyl carbonate, ethylmethyl carbonate (EMC), methylpropyl carbonate, and ethylpropyl carbonate, and specifically may include ethylmethyl carbonate (EMC).

The linear ester-based organic solvent may be at least one selected from the group consisting of methyl acetate, ethyl acetate, propyl acetate, methyl propionate, ethyl propionate, propyl propionate, and butyl propionate.

The cyclic ester-based organic solvent may be at least one selected from the group consisting of γ-butyrolactone, γ-valerolactone, γ-caprolactone, σ-valerolactone, and ε-caprolactone.

Preferably, the electrolyte according to the present invention may include ethylene carbonate and dimethyl carbonate as the organic solvent.

Meanwhile, the electrolyte may further include other additives, in addition to the electrolyte components described above, for the purpose of, for example, improving the life characteristics of the battery, suppressing the decrease of the battery capacity, and improving the discharge capacity of the battery.

The other additives may include at least one selected from the group consisting of, for example, cyclic carbonate-based compounds, halogen-substituted carbonate-based compounds, sultone-based compounds, sulfate-based compounds, borate-based compounds, nitrile-based compounds, benzene-based compounds, amine-based compounds, silane-based compounds, and lithium salt-based compounds different from the lithium salt included in the electrolyte.

Specifically, the other additives are one or two or more selected from the group consisting of vinylene carbonate (VC), vinylethylene carbonate, fluoroethylene carbonate (FEC), 1,3-propane sultone (PS), 1,4-butane sultone, ethene sultone, 1,3-propene sultone (PRS), 1,4-butene sultone, 1-methyl-1,3-propene sultone, ethylene sulfate (Esa), trimethylene sulfate (TMS), methyl trimethylene sulfate (MTMS), tetraphenylborate, lithium oxalyl difluoroborate, succinonitrile, adiponitrile, acetonitrile, propionitrile, butyronitrile, valeronitrile, caprylonitrile, heptanitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, 4-fluorophenylacetonitrile, fluorobenzene, triethanolamine, ethylenediamine, tetravinylsilane, $LiN(SO_2F)_2$ (lithium bis(fluorosulfonyl)imide, LiFSI), $LiN(SO_2CF_3)_2$ (lithium bis(trifluoromethane sulfonyl) imide, LiTFSI), $LiPO_2F_2$, LiODFB, LiBOB (lithium bisoxalatoborate ($LiB(C_2O_4)_2$), and $LiBF_4$.

The other additives may be included in an amount of 0.01 to 20 wt% based on the total weight of the electrolyte, or may be included in an amount of 0.05 to 5.0 wt%. In a case in which the above range is satisfied, high-temperature life characteristics and low-temperature output characteristics may be improved, and a side reaction in the electrolyte may be prevented.

(3) Battery Case

The battery case is used to accommodate the electrode assembly and the electrolyte, and examples thereof include various battery cases well-known in the art, for example, cylindrical battery cases, prismatic battery cases, and pouch type battery cases.

The lithium secondary battery according to the present invention may be useful in portable devices such as mobile phones, laptop computers, and digital cameras, and electric vehicles such as hybrid electric vehicles (HEVs).

Further, a battery module or battery pack including the lithium secondary battery as a unit cell may be used as a power source for one or more medium- to large-sized devices, including power tools; electric vehicles including electric vehicles (EVs), hybrid electric vehicles (HEVs), and plug-in hybrid electric vehicles (PHEVs); and power storage systems.

The lithium secondary battery according to the present invention may be used not only as a battery cell used as a power source for a small device, but also as a unit battery in a medium- to large-sized battery module including a plurality of battery cells.

Examples of the medium- and large-sized devices include, but are not limited to, electric vehicles, hybrid electric vehicles, plug-in hybrid electric vehicles, and power storage systems.

**Manufacturing Method of Positive Electrode**

Next, referring to Fig. 1, a manufacturing method of the positive electrode according to the present invention is described.

The manufacturing method of the positive electrode according to the present invention includes: (S1) performing a first rinsing by mixing a first positive electrode active material in distilled water, followed by drying; (S2) performing a second rinsing by mixing a second positive electrode active material in distilled water, followed drying; and (S3) forming a positive electrode active material layer including the first positive electrode active material and the second positive electrode active material, in which the first rinsing is performed at a higher temperature than the second rinsing, an average particle diameter $D_{50}$ of the first positive electrode active material is larger than an average particle diameter $D_{50}$ of the second positive electrode active material, the first positive electrode active material and the second positive electrode active material include single-particle type particles, and an interface resistance of the positive electrode having an SOC of 50% measured in a coin half-cell manufactured using the positive electrode is $6.5\,\Omega$ to $8.5\,\Omega$, and an interface resistance of the positive electrode having an SOC of 10% measured in a coin half-cell manufactured using the positive electrode is $15\,\Omega$ to $19\,\Omega$.

Hereinafter, each step of the manufacturing method of the positive electrode according to the present invention is described in detail with reference to the FIGURE.

(1) Step S1: First Positive Electrode Active Material Rinsing Step

First, a first rinsing is performed by mixing the first positive electrode active material in distilled water, and followed by drying (step S1).

The first positive electrode active material includes single-particle type particles.

Since the first positive electrode active material is the same as described above, detailed description thereof is omitted.

The step S1 serves to control the interface resistance of the positive electrode within a specific range by performing the rinsing intensity of the first positive electrode active material higher than the rinsing intensity of the second positive electrode active material in Step S2 described below.

Specifically, the first rinsing is performed at a higher temperature than the second rinsing.

The first rinsing is performed at 20 °C to 40 °C, 25 °C to 35 °C, or 27 °C to 38 °C. When the first rinsing is performed at the above temperature, the interface resistance of the positive electrode may be controlled within the desired range.

In addition, the first rinsing may be performed by mixing the first positive electrode active material in an amount of 50 wt% to 70 wt%, 55 wt% to 65 wt%, or 57 wt% to 63 wt% based on the total weight of distilled water. In this case, the amount of residual lithium on the surface of the positive electrode active material may be reduced, thereby preventing deterioration of high-temperature durability.

The drying may be performed at 60 °C to 200 °C, 70 °C to 180 °C, or 80 °C to 160 °C.

(2) Step S2: Second Positive Electrode Active Material Rinsing Step

First, a second rinsing is performed by mixing the second positive electrode active material in distilled water, and followed by drying (step S2).

The second positive electrode active material includes single-particle type particles. When the second positive electrode active material includes single-particle type particles, due to the large size of the single-particle type particle size, the diffusion distance of lithium is long, which increases diffusion resistance, so that the positive electrode may have low efficiency, which may be balanced with the negative electrode, when applying a silicon-based negative electrode active material. Accordingly, the problem of lithium ion loss due to irreversible capacity when applying a conventional silicon-based negative electrode active material may be solved, and the lithium precipitation phenomenon on the surface of the negative electrode may be prevented or suppressed, so that the life characteristics of a lithium secondary battery applying the positive electrode according to the present invention may be improved. In addition, when applying the second positive electrode active material which is a single-particle type particle, unlike when using a conventional sacrificial positive electrode material, the generation of lithium byproducts due to the sacrificial positive electrode material during charge and discharge may be prevented or suppressed, so that the high-temperature storage characteristics and the high-temperature life characteristics may be superior.

The average particle diameter $D_{50}$ of the first positive electrode active material is larger than the average particle diameter $D_{50}$ of the second positive electrode active material.

Since the second positive electrode active material is the same as described above, detailed description thereof is omitted.

Step S2 is performed by lowering the rinsing intensity of the second positive electrode active material having a smaller particle size and larger specific surface area than the first positive electrode active material, thereby preventing or suppressing deterioration of the high-temperature durability of the second positive electrode active material and controlling the interface resistance of the positive electrode within a specific range.

According to one embodiment, the second rinsing may be performed at 3 °C to 18 °C, 5 °C to 15 °C, or 7 °C to 13 °C. When the second washing is performed within the above range, the interface resistance of the positive electrode may be controlled within the desired range while preventing deterioration of high-temperature durability.

The second rinsing may be performed by mixing the second positive electrode active material in an amount of 65 wt% to 85 wt%, 70 wt% to 80 wt%, or 72 wt% to 78 wt% based on the total weight of distilled water. In this case, the amount of residual lithium on the surface of the positive electrode active material may be reduced, thereby preventing deterioration of high-temperature durability.

The drying may be performed at 60 °C to 200 °C, 70 °C to 180 °C, or 80 °C to 160 °C.

(3) Step S3: Positive Electrode Active Material Layer Forming Step

Next, a step of forming a positive electrode active material layer including the first positive electrode active material and the second positive electrode active material is performed (step S3).

First, the first positive electrode active material, the second positive electrode active material, and the solvent may be mixed to prepare a positive electrode slurry.

Since the first positive electrode active material and the second positive electrode active material are the same as described above, detailed description thereof is omitted.

The positive electrode slurry may optionally further include a positive electrode binder and/or a positive electrode conductive material.

Since the positive electrode binder and the positive electrode conductive material are the same as described above, detailed description thereof is omitted.

Meanwhile, the solvent used in the positive electrode slurry may be an aqueous solvent, an organic solvent, or a combination thereof.

The aqueous solvent may include, for example, water, and the organic solvent may include one or more selected from the group consisting of N-methyl pyrrolidone (NMP), dimethylformamide (DMF), dimethyl sulfoxide (DMSO), dihydrolevoglucosenone (Cyrene), $\gamma$-valerolactone, dimethyl isosorbide (DMI), and methyl-5-(dimethylamino)-2-methyl-5-oxopentanoate, or may include N-methyl pyrrolidone, according to one embodiment.

Next, the positive electrode slurry may be applied to a positive electrode current collector, and dried to form a positive electrode active material layer. Specifically, a positive electrode may be manufactured by applying the positive electrode slurry to one or both sides of the positive electrode current collector, and then drying and rolling to form a positive electrode active material layer.

Since the positive electrode current collector is the same as described above, detailed description thereof is omitted.

The applying may be performed continuously or discontinuously using various applying methods well-known in the art, for example, a slot die coating, a slide coating, and a curtain coating.

The drying may be performed at 40 °C to 180 °C, 60 °C to 160 °C, or 70 °C to 150 °C.

The rolling may be performed according to a roll press method, which rolls the positive electrode by adjusting the gap between upper and lower rolls to match the thickness of the positive electrode, but is not limited thereto.

Meanwhile, in the coin half-cell manufactured using the positive electrode, the interface resistance of the positive electrode having an SOC of 50% is 6.5 Ω to 8.5 Q. Specifically, in coin half-cell manufactured using the positive electrode, the interface resistance of the positive electrode having an SOC of 50% may be 6.5 Ω or more, 6.7 Ω or more, 6.9 Ω or more, 7.0 Ω or more, or 7.2 Ω or more, and may be 8.5 Ω or less, 8.3 Ω or less, 8.1 Ω or less, 8.0 Ω or less, 7.8 Ω or less, 7.6 Ω or less, or 7.4 Ω or less. For example, in the coin half-cell manufactured using the positive electrode, the interface resistance of the positive electrode having an SOC of 50% may be 6.5 Ω to 8.5 Ω, 6.7 Ω) to 8.0 Ω, or 6.9 Ω to 7.4 Q. When the range above is satisfied, the interfacial resistance of the positive electrode at an SOC of 50% may be maintained without increasing, so that the overall resistance of the cell does not increase, thereby avoiding the problem of increasing initial resistance during charge and discharge, and thus, improving the life characteristics of the cell.

In addition, in the coin half-cell manufactured using the positive electrode, the interface resistance of the positive electrode having an SOC of 10% is 15 Ω to 19 Ω. Specifically, in coin half-cell manufactured using the positive electrode, the interface resistance of the positive electrode having an SOC of 10% may be 15 Ω or more, 15.2 Ω or more, 15.4 Ω or more, 15.6 Ω or more, 15.8 Ω or more, 16 Ω or more, 16.2 Ω or more, 16.4 Ω or more, 16.6 Ω or more, 16.8 Ω or more, 17 Ω or more, 17.2 Ω or more, or 17.4 Ω) or more, and may be 19 Ω or less, 18.8 Ω or less, 18.6 Ω or less, 18.4 Ω or less, 18.2 Ω or less, 18 Ω or less, 17.8 Ω) or less, 17.6 Ω or less. For example, in the positive electrode, the coin half-cell manufactured using the positive electrode, the interface resistance of the positive electrode having an SOC of 10% may be 15 Ω to 19 Ω, 15.2 Ω) to 18 Ω, 16 Ω to 17.8 Ω, or 17 Ω to 17.6 Q. When the range above is satisfied, the resistance difference between the positive electrode and the negative electrode at the discharge end may be reduced, which may suppress the phenomenon of precipitation of lithium ions on the surface of the negative electrode to suppress the degeneration of the negative electrode, thereby solving the problem of deterioration of the cycle characteristics of the battery, preventing or suppressing the problem of increasing the initial resistance during charge and discharge, and thus, improving the life characteristics of the battery.

Since the manufactured positive electrode is the same as described above, detailed description thereof is omitted.

Hereinafter, embodiments of the present invention are described in detail to enable one of ordinary skill in the art to which the present invention belongs, to easily practice the present invention. However, the present invention may be implemented in many different forms and is not limited to the embodiments described herein.

**Example 1**

<Preparation of First Positive Electrode Active Material>

A transition metal aqueous solution was prepared by mixing $NiSO_4$, $CoSO_4$, and $MnSO_4$ in distilled water in such an amount that the molar ratio of nickel:cobalt:manganese was 83:7:10.

Subsequently, deionized water was introduced into a reactor, and then, the reactor was purged with nitrogen gas to remove dissolved oxygen in the water and set up a non-oxidizing atmosphere inside the reactor. Thereafter, while adding NaOH, a co-precipitation reaction was progressed to prepare a precursor having an average particle diameter $D_{50}$ of 8.6 μm and represented by $Ni_{0.83}Co_{0.07}Mn_{0.1}(OH)_2$.

The precursor and LiOH were mixed in a ratio of 1:1.05, Al was added as a doping element, and the mixture was calcined at 910 °C for 16 hours to prepare a first lithium transition metal oxide represented by $Li[Ni_{0.81}Co_{0.07}Mn_{0.10}Al_{0.02}]O_2$.

Then, the first lithium transition metal oxide was rinsed by being mixed in distilled water at 30 °C to reach a solid content of 60 wt%, dried, and then, mixed with $Co(OH)_2$. Then, a heat treatment was performed at 750 °C for 5 hours to prepare a Co-coated first positive electrode active material. It was confirmed that the first positive electrode active material contained 3 mol% Co, had an average particle diameter $D_{50}$ of 8.6 μm, and was a single-particle type particle.

<Preparation of Second Positive Electrode Active Material>

A transition metal aqueous solution was prepared by mixing $NiSO_4$, $CoSO_4$, and $MnSO_4$ in distilled water in such an amount that the molar ratio of nickel:cobalt:manganese was 83:7:10.

Subsequently, deionized water was introduced into a reactor, and then, the reactor was purged with nitrogen gas to remove dissolved oxygen in the water and set up a non-oxidizing atmosphere inside the reactor. Thereafter, while adding NaOH, a co-precipitation reaction was progressed to prepare a precursor having an average particle diameter $D_{50}$ of 3.1 μm, and represented by $Ni_{0.83}Co_{0.07}Mn_{0.1}(OH)_2$.

The precursor and LiOH were mixed in a ratio of 1:1.05, Al was added as a doping element, and the mixture was calcined at 910 °C for 16 hours to prepare a second lithium transition metal oxide represented by $Li[Ni_{0.81}Co_{0.07}Mn_{0.10}Al_{0.02}]O_2$.

Then, the second lithium transition metal oxide was rinsed by being mixed in distilled water at 10 °C, to reach a solid content of 75 wt%, dried, and then, mixed with $Co(OH)_2$. Then, a heat treatment was performed at 750 °C for 5 hours to prepare a Co-coated second positive electrode active material. It was confirmed that the second positive electrode active material contained 1 mol% Co, had an average particle diameter $D_{50}$ of 3.1 μm, and was a single-particle type particle as in the case of the first positive electrode active material.

<Manufacture of Positive Electrode>

The first positive electrode active material and the second positive electrode active material that were prepared as described above were mixed in a weight ratio of 60:40 to prepare a positive electrode material. The positive electrode material, carbon black as a conductive agent, and polyvinylidene fluoride (PVDF) as a binder were mixed in a weight ratio of 96:2:2 in an N-methylpyrrolidone solvent to prepare a positive electrode slurry. The positive electrode slurry was applied to one side of an aluminum collector having a thickness of 20 $\mu$m, dried at 130 °C, and then, rolled to manufacture a positive electrode having a thickness of 70 $\mu$m.

**Example 2**

<Preparation of First Positive Electrode Active Material>

A transition metal aqueous solution was prepared by mixing $NiSO_4$, $CoSO_4$, and $MnSO_4$ in distilled water in such an amount that the molar ratio of nickel:cobalt:manganese was 83:7:10.
Subsequently, deionized water was introduced into a reactor, and then, the reactor was purged with nitrogen gas to remove dissolved oxygen in the water and set up a non-oxidizing atmosphere inside the reactor. Thereafter, while adding NaOH, a co-precipitation reaction was progressed to prepare a precursor having an average particle diameter $D_{50}$ of 8.4 $\mu$m and represented by $Ni_{0.83}Co_{0.07}Mn_{0.1}(OH)_2$.
The precursor and LiOH were mixed in a ratio of 1:1.05, Al was added as a doping element, and the mixture was calcined at 910 °C for 16 hours to prepare a first lithium transition metal oxide represented by $Li[Ni_{0.81}Co_{0.07}Mn_{0.10}Al_{0.02}]O_2$.
Then, the first lithium transition metal oxide was rinsed by being mixed in distilled water at 25 °C to reach a solid content of 60 wt%, dried, and then, mixed with $Co(OH)_2$. Then, a heat treatment was performed at 750 °C for 5 hours to prepare a Co-coated first positive electrode active material. It was confirmed that the first positive electrode active material contained 3 mol% Co, had an average particle diameter $D_{50}$ of 8.4 $\mu$m, and was a single-particle type particle.

<Preparation of Second Positive Electrode Active Material>

A transition metal aqueous solution was prepared by mixing $NiSO_4$, $CoSO_4$, and $MnSO_4$ in distilled water in such an amount that the molar ratio of nickel:cobalt:manganese was 83:7:10.
Subsequently, deionized water was introduced into a reactor, and then, the reactor was purged with nitrogen gas to remove dissolved oxygen in the water and set up a non-oxidizing atmosphere inside the reactor. Thereafter, while adding NaOH, a co-precipitation reaction was progressed to prepare a precursor having an average particle diameter $D_{50}$ of 3.3 $\mu$m, and represented by $Ni_{0.83}Co_{0.07}Mn_{0.1}(OH)_2$.
The precursor and LiOH were mixed in a ratio of 1:1.05, Al was added as a doping element, and the mixture was calcined at 910 °C for 16 hours to prepare a second lithium transition metal oxide represented by $Li[Ni_{0.81}Co_{0.07}Mn_{0.10}Al_{0.02}]O_2$.
Then, the second lithium transition metal oxide was rinsed by being mixed in distilled water at 15 °C, to reach a solid content of 75 wt%, dried, and then, mixed with $Co(OH)_2$. Then, a heat treatment was performed at 750 °C for 5 hours to prepare a Co-coated second positive electrode active material. It was confirmed that the second positive electrode active material contained 1 mol% Co, had an average particle diameter $D_{50}$ of 3.3 $\mu$m, and was a single-particle type particle.

<Manufacture of Positive Electrode>

A positive electrode was manufactured in the same manner as in Example 1, except that the first positive electrode active material and the second positive electrode active material prepared above were used.

**Example 3**

<Preparation of First Positive Electrode Active Material>

A transition metal aqueous solution was prepared by mixing $NiSO_4$, $CoSO_4$, and $MnSO_4$ in distilled water in such an amount that the molar ratio of nickel:cobalt:manganese was 83:7:10.
Subsequently, deionized water was introduced into a reactor, and then, the reactor was purged with nitrogen gas to remove dissolved oxygen in the water and set up a non-oxidizing atmosphere inside the reactor. Thereafter, while adding NaOH, a co-precipitation reaction was progressed to prepare a precursor having an average particle diameter $D_{50}$ of 8.1 $\mu$m and represented by $Ni_{0.83}Co_{0.07}Mn_{0.1}(OH)_2$.

The precursor and LiOH were mixed in a ratio of 1:1.05, Al was added as a doping element, and the mixture was calcined at 910 °C for 16 hours to prepare a first lithium transition metal oxide represented by $Li[Ni_{0.81}Co_{0.07}Mn_{0.10}Al_{0.02}]O_2$.

Then, the first lithium transition metal oxide was rinsed by being mixed in distilled water at 30 °C to reach a solid content of 60 wt%, dried, and then, mixed with $Co(OH)_2$. Then, a heat treatment was performed at 750 °C for 5 hours to prepare a Co-coated first positive electrode active material. It was confirmed that the first positive electrode active material contained 2.5 mol% Co, had an average particle diameter $D_{50}$ of 8.1 $\mu$m, and was a single-particle type particle.

<Preparation of Second Positive Electrode Active Material>

A transition metal aqueous solution was prepared by mixing $NiSO_4$, $CoSO_4$, and $MnSO_4$ in distilled water in such an amount that the molar ratio of nickel:cobalt:manganese was 83:7:10.

Subsequently, deionized water was introduced into a reactor, and then, the reactor was purged with nitrogen gas to remove dissolved oxygen in the water and set up a non-oxidizing atmosphere inside the reactor. Thereafter, while adding NaOH, a co-precipitation reaction was progressed to prepare a precursor having an average particle diameter $D_{50}$ of 3.5 $\mu$m, and represented by $Ni_{0.83}Co_{0.07}Mn_{0.1}(OH)_2$.

The precursor and LiOH were mixed in a ratio of 1:1.05, Al was added as a doping element, and the mixture was calcined at 910 °C for 16 hours to prepare a second lithium transition metal oxide represented by $Li[Ni_{0.81}Co_{0.07}Mn_{0.10}Al_{0.02}]O_2$.

Then, the second lithium transition metal oxide was rinsed by being mixed in distilled water at 10 °C, to reach a solid content of 75 wt%, dried, and then, mixed with $Co(OH)_2$. Then, a heat treatment was performed at 750 °C for 5 hours to prepare a Co-coated second positive electrode active material. It was confirmed that the second positive electrode active material contained 1.5 mol% Co, had an average particle diameter $D_{50}$ of 3.5 $\mu$m, and was a single-particle type particle.

<Manufacture of Positive Electrode>

A positive electrode was manufactured in the same manner as in Example 1, except that the first positive electrode active material and the second positive electrode active material prepared above were used.

**Comparative Example 1**

<Preparation of First Positive Electrode Active Material>

A transition metal aqueous solution was prepared by mixing $NiSO_4$, $CoSO_4$, and $MnSO_4$ in distilled water in such an amount that the molar ratio of nickel:cobalt:manganese was 83:7:10.

Subsequently, deionized water was introduced into a reactor, and then, the reactor was purged with nitrogen gas to remove dissolved oxygen in the water and set up a non-oxidizing atmosphere inside the reactor. Thereafter, while adding NaOH, a co-precipitation reaction was progressed to prepare a precursor having an average particle diameter D50 of 7.2 $\mu$m and represented by $Ni_{0.83}Co_{0.07}Mn_{0.1}(OH)_2$.

The precursor and LiOH were mixed in a ratio of 1:1.05, Al was added as a doping element, and the mixture was calcined at 910 °C for 16 hours to prepare a first lithium transition metal oxide represented by $Li[Ni_{0.81}Co_{0.07}Mn_{0.10}Al_{0.02}]O_2$.

Then, the first lithium transition metal oxide was rinsed by being mixed in distilled water at 10 °C to reach a solid content of 75 wt%, dried, and then, mixed with $Co(OH)_2$. Then, a heat treatment was performed at 750 °C for 5 hours to prepare a Co-coated first positive electrode active material. It was confirmed that the first positive electrode active material contained 3 mol% Co, had an average particle diameter $D_{50}$ of 7.2 $\mu$m, and was a single-particle type particle.

<Preparation of Second Positive Electrode Active Material>

A transition metal aqueous solution was prepared by mixing $NiSO_4$, $CoSO_4$, and $MnSO_4$ in distilled water in such an amount that the molar ratio of nickel:cobalt:manganese was 83:7:10.

Subsequently, deionized water was introduced into a reactor, and then, the reactor was purged with nitrogen gas to remove dissolved oxygen in the water and set up a non-oxidizing atmosphere inside the reactor. Thereafter, while adding NaOH, a co-precipitation reaction was progressed to prepare a precursor having an average particle diameter $D_{50}$ of 2.5 $\mu$m, and represented by $Ni_{0.83}Co_{0.07}Mn_{0.1}(OH)_2$.

The precursor and LiOH were mixed in a ratio of 1:1.05, Al was added as a doping element, and the mixture was calcined at 910 °C for 16 hours to prepare a second lithium transition metal oxide represented by $Li[Ni_{0.81}Co_{0.07}Mn_{0.10}Al_{0.02}]O_2$.

Then, the second lithium transition metal oxide was rinsed by being mixed in distilled water at 10 °C, to reach a solid content of 75 wt%, dried, and then, mixed with Co(OH)$_2$. Then, a heat treatment was performed at 750 °C for 5 hours to prepare a Co-coated second positive electrode active material. It was confirmed that the second positive electrode active material contained 1 mol% Co, had an average particle diameter D$_{50}$ of 2.5 μm, and was a single-particle type particle.

<Manufacture of Positive Electrode>

A positive electrode was manufactured in the same manner as in Example 1, except that the first positive electrode active material and the second positive electrode active material prepared above were used.

**Comparative Example 2**

<Preparation of First Positive Electrode Active Material>

A transition metal aqueous solution was prepared by mixing NiSO$_4$, CoSO$_4$, and MnSO$_4$ in distilled water in such an amount that the molar ratio of nickel:cobalt:manganese was 83:7:10.
Subsequently, deionized water was introduced into a reactor, and then, the reactor was purged with nitrogen gas to remove dissolved oxygen in the water and set up a non-oxidizing atmosphere inside the reactor. Thereafter, while adding NaOH, a co-precipitation reaction was progressed to prepare a precursor having an average particle diameter D$_{50}$ of 7.7 μm and represented by Ni$_{0.83}$Co$_{0.07}$Mn$_{0.1}$(OH)$_2$.
The precursor and LiOH were mixed in a ratio of 1:1.05, Al was added as a doping element, and the mixture was calcined at 910 °C for 16 hours to prepare a first lithium transition metal oxide represented by Li[Ni$_{0.81}$Co$_{0.07}$Mn$_{0.10}$Al$_{0.02}$]O$_2$.
Then, the first lithium transition metal oxide was rinsed by being mixed in distilled water at 30 °C to reach a solid content of 60 wt%, dried, and then, mixed with Co(OH)$_2$. Then, a heat treatment was performed at 750 °C for 5 hours to prepare a Co-coated first positive electrode active material. It was confirmed that the first positive electrode active material contained 1 mol% Co, had an average particle diameter D$_{50}$ of 7.7 μm, and was a single-particle type particle.

<Preparation of Second Positive Electrode Active Material>

A transition metal aqueous solution was prepared by mixing NiSO$_4$, CoSO$_4$, and MnSO$_4$ in distilled water in such an amount that the molar ratio of nickel:cobalt:manganese was 83:7:10.
Subsequently, deionized water was introduced into a reactor, and then, the reactor was purged with nitrogen gas to remove dissolved oxygen in the water and set up a non-oxidizing atmosphere inside the reactor. Thereafter, while adding NaOH, a co-precipitation reaction was progressed to prepare a precursor having an average particle diameter D$_{50}$ of 2.9 μm, and represented by Ni$_{0.83}$Co$_{0.07}$Mn$_{0.1}$(OH)$_2$.
The precursor and LiOH were mixed in a ratio of 1:1.05, Al was added as a doping element, and the mixture was calcined at 910 °C for 16 hours to prepare a second lithium transition metal oxide represented by Li[Ni$_{0.81}$Co$_{0.07}$Mn$_{0.10}$Al$_{0.02}$]O$_2$.
Then, the second lithium transition metal oxide was rinsed by being mixed in distilled water at 10 °C, to reach a solid content of 70 wt%, dried, and then, mixed with Co(OH)$_2$. Then, a heat treatment was performed at 750 °C for 5 hours to prepare a Co-coated second positive electrode active material. It was confirmed that the second positive electrode active material contained 1 mol% Co, had an average particle diameter D$_{50}$ of 2.9 μm, and was a single-particle type particle.

<Manufacture of Positive Electrode>

A positive electrode was manufactured in the same manner as in Example 1, except that the first positive electrode active material and the second positive electrode active material prepared above were used.

**Comparative Example 3**

<Preparation of First Positive Electrode Active Material>

A transition metal aqueous solution was prepared by mixing NiSO$_4$, CoSO$_4$, and MnSO$_4$ in distilled water in such an amount that the molar ratio of nickel:cobalt:manganese was 83:7:10.
Subsequently, deionized water was introduced into a reactor, and then, the reactor was purged with nitrogen gas to remove dissolved oxygen in the water and set up a non-oxidizing atmosphere inside the reactor. Thereafter, while adding NaOH, a co-precipitation reaction was progressed to prepare a precursor having an average particle diameter D$_{50}$

of 8.5 $\mu$m and represented by $Ni_{0.83}Co_{0.07}Mn_{0.1}(OH)_2$.

The precursor and LiOH were mixed in a ratio of 1:1.05, Al was added as a doping element, and the mixture was calcined at 910 °C for 16 hours to prepare a first lithium transition metal oxide represented by $Li[Ni_{0.81}Co_{0.07}Mn_{0.10}Al_{0.02}]O_2$.

Then, the first lithium transition metal oxide was rinsed by being mixed in distilled water at 10 °C to reach a solid content of 75 wt%, dried, and then, mixed with $Co(OH)_2$. Then, a heat treatment was performed at 750 °C for 5 hours to prepare a Co-coated first positive electrode active material. It was confirmed that the first positive electrode active material contained 3 mol% Co, had an average particle diameter $D_{50}$ of 8.5 $\mu$m, and was a single-particle type particle.

<Preparation of Second Positive Electrode Active Material>

A transition metal aqueous solution was prepared by mixing $NiSO_4$, $CoSO_4$, and $MnSO_4$ in distilled water in such an amount that the molar ratio of nickel:cobalt:manganese was 83:7:10.

Subsequently, deionized water was introduced into a reactor, and then, the reactor was purged with nitrogen gas to remove dissolved oxygen in the water and set up a non-oxidizing atmosphere inside the reactor. Thereafter, while adding NaOH, a co-precipitation reaction was progressed to prepare a precursor having an average particle diameter $D_{50}$ of 3.0 $\mu$m, and represented by $Ni_{0.83}Co_{0.07}Mn_{0.1}(OH)_2$.

The precursor and LiOH were mixed in a ratio of 1:1.05, Al was added as a doping element, and the mixture was calcined at 910 °C for 16 hours to prepare a second lithium transition metal oxide represented by $Li[Ni_{0.81}Co_{0.07}Mn_{0.10}Al_{0.02}]O_2$.

Then, the second lithium transition metal oxide was rinsed by being mixed in distilled water at 10 °C, to reach a solid content of 70 wt%, dried, and then, mixed with $Co(OH)_2$. Then, a heat treatment was performed at 750 °C for 5 hours to prepare a Co-coated second positive electrode active material. It was confirmed that the second positive electrode active material contained 1 mol% Co, had an average particle diameter $D_{50}$ of 3.0 $\mu$m, and was a single-particle type particle.

<Manufacture of Positive Electrode>

A positive electrode was manufactured in the same manner as in Example 1, except that the first positive electrode active material and the second positive electrode active material prepared above were used.

**Experimental Example** 1 - **Measurement of Positive Electrode Interface Resistance and Evaluation of IRR Value**

A coin half-cell was manufactured by interposing a porous polyethylene separator between each of the positive electrodes manufactured in Examples 1 to 3 and Comparative Examples 1 to 3 and a lithium metal negative electrode to prepare an electrode assembly, positioning the electrode assembly inside a battery case, and then injecting an electrolyte into the battery case. The electrolyte used was 1.0 M $LiPF_6$ dissolved in a mixed organic solvent of ethylene carbonate (EC) :ethyl methyl carbonate (EMC) in a volume ratio of 3:7.

Next, for each coin half-cell manufactured above, the battery was subjected to two cycles each of which includes charging under the conditions of CC/CV, 0.1C, 4.2V, 0.05C cut at 25 °C, and discharging at CC, 0.1C, 3.0V, and then charged to SOC 50% and SOC 10% at 0.1C. Then, the positive electrode interface resistance at SOC 50% and SOC 10% of each coin half-cell was measured using a Biologic VMP3 device (in a range of 100kHz to 10mHz at 25 °C). The measurement results are indicated in Table 1 below.

In addition, the IRR value defined by Equation 1 below was calculated using the positive electrode interface resistance at SOC 50% and SOC 10% of the coin half-cells manufactured using the positive electrodes of Examples 1 to 3 and Comparative Examples 1 to 3 measured above. The calculated IRR values are indicated in Table 1 below.

$$[00249] \ (Equation\ 1)$$

$$IRR = R_{CT50} \times R_{CT10}$$

In Equation 1, $R_{CT50}$ is a dimensionless number of an interface resistance (unit: $\Omega$) of the positive electrode having an SOC of 50% measured in a coin half-cell manufactured using the positive electrode, and $R_{CT10}$ is a dimensionless number of an interface resistance (unit: $\Omega$) of the positive electrode having an SOC of 10% measured in a coin half-cell manufactured using the positive electrode.

[Table 1]

|  | Positive electrode Interface Resistance at SOC 50% [Ω] | Positive electrode Interface Resistance at SOC 10% [Ω] | IRR value |
|---|---|---|---|
| Example 1 | 7.23 | 17.44 | 126.0912 |
| Example 2 | 6.89 | 15.32 | 105.5548 |
| Example 3 | 7.46 | 17.99 | 134.2054 |
| Comparative Example 1 | 6.12 | 14.56 | 89.1072 |
| Comparative Example 2 | 8.66 | 19.25 | 166.705 |
| Comparative Example 3 | 6.47 | 14.78 | 95.6266 |

Referring to Table 1, it can be seen that, as measured in the coin half-cell manufactured using the positive electrode of the present invention as in Examples 1, 2, and 3, the interface resistance of the positive electrode having an SOC of 50% is 6.5 Ω to 8.5 Ω, and the interface resistance of the positive electrode having an SOC of 10% is 15 Ω to 19 Ω. In addition, it can be seen that the IRR value is in the range of 96 or more and 166 or less.

**Experimental Example 2** - **Initial Resistance Evaluation**

A negative electrode slurry was prepared by mixing a negative electrode active material of SiO:artificial graphite in a weight ratio of 5:95, a conductive material of carbon black, SBR as a binder, and CMC as a thickener in a weight ratio of 95.6:1.0:2.3:1.1 in distilled water. The negative electrode slurry was applied to one surface of a copper current collector having a thickness of 12 μm, dried at 130°C, and then rolled to prepare a negative electrode (slurry solid content: 50 wt% based on the total weight of the negative electrode slurry).

A lithium secondary battery was manufactured by interposing a porous polyethylene separator between each of the positive manufactured in Examples 1 to 3 and Comparative Example 2 and a negative electrode to prepare an electrode assembly, positioning the electrode assembly inside a battery case, and then injecting an electrolyte thereinto. The electrolyte used was 1.0 M $LiPF_6$ dissolved in a mixed organic solvent of ethylene carbonate (EC):ethyl methyl carbonate (EMC) in a volume ratio of 3:7.

Each lithium secondary battery manufactured as described above was charged at 25°C in CC/CV mode at 0.1C until 4.2V and discharged at a constant current of 0.1C. Then, discharge resistance (HPPC) was measured at SOC 50% and SOC 10%. The results are indicated in Table 2.

[Table 2]

|  | Discharge resistance at SOC 50% (HPPC) [Ω] | Discharge resistance at SOC 10% (HPPC) [Ω] |
|---|---|---|
| Example 1 | 1.56 | 4.11 |
| Example 2 | 1.52 | 3.89 |
| Example 3 | 1.61 | 4.17 |
| Comparative Example 2 | 1.72 | 4.86 |

Referring to Table 2 above, it can be confirmed that the lithium secondary batteries manufactured using the positive electrodes manufactured in Examples 1 to 3 have lower discharge resistance at SOC 50% and SOC 10% than the lithium secondary batteries manufactured using the positive electrode manufactured in Comparative Example 2.

Experimental Example 3- Evaluation of High Temperature Life Characteristics

The lithium secondary batteries including the negative electrode manufactured in Experimental Example 2 and the positive electrodes manufactured in Examples 1 to 3 and Comparative Examples 1 to 3 were subjected to 100 cycles, each of which includes charging at 45 °C under conditions of CC/CV, 0.05 C and 4.2 V, 0.05 C cut, and discharging to 3.0 V under conditions of CC, 1.0 C using an electrochemical charger/discharger.

(1) Capacity Retention Rate

The capacity retention rate was calculated using the equation below, and the results are indicated in Table 3 below.

Capacity retention rate (%)={(discharge capacity after 100 cycles/discharge capacity after 1 cycle)} x 100

(2) Resistance Increase Rate

After one cycle of charge and discharge, the discharge capacity after one cycle was measured using the electrochemical charger/discharger, the SOC was adjusted to SOC 50%, and then, a pulse of 2.5 C was applied for 10 seconds to calculate the initial resistance from the difference between the voltage before the pulse application and the voltage after the pulse application.
After 100 cycles of charge and discharge, the resistance after 100 cycles was calculated using the same method as described above, and the resistance increase rate was calculated using the equation below. The results are indicated in Table 3 below.

Resistance increase rate (%)=(resistance after 100 cycles-initial resistance)/initial resistance x 100

[Table 3]

| | Capacity retention rate (%) | Resistance increase rate (%) |
|---|---|---|
| Example 1 | 98.9 | 11.3 |
| Example 2 | 97.4 | 16.3 |
| Example 3 | 96.9 | 18.1 |
| Comparative Example 1 | 93.2 | 43.5 |
| Comparative Example 2 | 94.5 | 39.7 |
| Comparative Example 3 | 93.9 | 47.2 |

Referring to Table 3 above, the lithium secondary batteries manufactured using the positive electrodes manufactured in Examples 1 to 3 have higher capacity retention rates at 45 °C and lower resistance increase rates at 45 °C than the lithium secondary batteries manufactured using the positive electrodes manufactured in Comparative Examples 1 to 3. From the results, it can be understood that the lithium secondary batteries manufactured using the positive electrodes manufactured in Examples 1 to 3 have excellent high-temperature life characteristics. While the technology of the present invention has been described with reference to embodiments, it may be appreciated by one skilled in the art of the present invention or one having ordinary skill in the art of the present invention that various modifications and changes may be made to the various embodiments of the present invention without departing from the technical scope of the various embodiments of the present invention defined in the claims attached herewith. Therefore, the technical scope of the various embodiments of the present invention is not limited to the detailed descriptions of the invention herein, but should be determined by the scope defined in the claims.

**Claims**

**1.** A positive electrode comprising:

a positive electrode active material layer including a first positive electrode active material and a second positive electrode active material having different average particle diameters from each other,
wherein an average particle diameter $D_{50}$ of the first positive electrode active material is larger than an average particle diameter $D_{50}$ of the second positive electrode active material,
the first positive electrode active material and the second positive electrode active material include single-particle type particles, and
an interface resistance of the positive electrode having an SOC of 50% measured in a coin half-cell manufactured using the positive electrode is 6.5 Ω to 8.5 Ω, and an interface resistance of the positive electrode having an SOC of 10% measured in a coin half-cell manufactured using the positive electrode is 15 $\Omega$ to 19 $\Omega$.

2. The positive electrode according to claim 1, wherein the first positive electrode active material includes a first lithium transition metal oxide represented by Formula 1:

(Formula 1)        $Li_{1+a1}Ni_{x1}Co_{y1}Mn_{z1}Al_{w1}M^1_{v1}O_2$

wherein $0 \leq a1 \leq 0.3$, $0.82 \leq x1 < 1.0$, $0 < y1 \leq 0.2$, $0 < z1 \leq 0.2$, $0 < w1 \leq 0.2$, $0 \leq v1 \leq 0.1$, and $M^1$ is at least one doping element selected from the group consisting of W, Cu, Fe, V, Cr, Ti, Zr, Zn, Al, In, Ta, Y, In, La, Sr, Ga, Sc, Gd, Sm, Ca, Ce, Nb, Mg, B, and Mo.

3. The positive electrode according to claim 1, wherein the second positive electrode active material includes a second lithium transition metal oxide represented by Formula 2:

(Formula 2)        $Li_{1+a2}Ni_{x2}Co_{y2}Mn_{z2}Al_{w2}M^2_{v2}O_2$

wherein $0 \leq a2 \leq 0.3$, $0.82 \leq x2 < 1.0$, $0 < y2 \leq 0.2$, $0 < z2 \leq 0.2$, $0 < w2 \leq 0.2$, $0 \leq v2 \leq 0.1$, and $M^2$ is at least one doping element selected from the group consisting of W, Cu, Fe, V, Cr, Ti, Zr, Zn, Al, In, Ta, Y, In, La, Sr, Ga, Sc, Gd, Sm, Ca, Ce, Nb, Mg, B, and Mo.

4. The positive electrode according to claim 1, wherein the first positive electrode active material has an average particle diameter $D_{50}$ of 6 $\mu$m to 12 $\mu$m.

5. The positive electrode according to claim 1, wherein the second positive electrode active material has an average particle diameter $D_{50}$ of 1.5 $\mu$m to 5 $\mu$m.

6. The positive electrode according to claim 1, wherein the first positive electrode active material includes a first lithium transition metal oxide, and a first coating layer positioned on a surface of the first lithium transition metal oxide particles and containing 1.5 mol% to 5 mol% of cobalt (Co).

7. The positive electrode according to claim 1, wherein the second positive electrode active material includes a second lithium transition metal oxide, and a second coating layer positioned on a surface of the second lithium transition metal oxide particles and containing 0.2 mol% to 2.5 mol% of cobalt (Co).

8. The positive electrode according to claim 1, wherein the first positive electrode active material and the second positive electrode active material are included in a weight ratio of 80:20 to 40:60.

9. A positive electrode comprising:

a positive electrode active material layer including a first positive electrode active material and a second positive electrode active material having different average particle diameters from each other,
wherein the average particle diameter $D_{50}$ of the first positive electrode active material is larger than the average particle diameter $D_{50}$ of the second positive electrode active material,
the first positive electrode active material and the second positive electrode active material include single-particle type particles, and
an IRR value is 96 to 166, as defined by Equation 1:

(Equation 1)

$$IRR = R_{CT50} \times R_{CT10}$$

wherein $R_{CT50}$ is a dimensionless number of an interface resistance (unit: $\Omega$) of the positive electrode having an SOC of 50% measured in a coin half-cell manufactured using the positive electrode, and
$R_{CT10}$ is a dimensionless number of an interface resistance (unit: $\Omega$) of the positive electrode having an SOC of 10% measured in a coin half-cell manufactured using the positive electrode.

10. A lithium secondary battery comprising: an electrode assembly including the positive electrode according to any one of claims 1 to claim 9, a negative electrode, and a separator; an electrolyte; and a battery case in which the electrode assembly and the electrolyte are accommodated,
wherein the negative electrode includes a silicon-based negative electrode active material.

11. The lithium secondary battery according to claim 10, wherein the negative electrode further includes a carbon-based negative electrode active material, and
the silicon-based negative electrode active material and the carbon-based negative electrode active material are included in a weight ratio of 1:99 to 30:70.

12. A method of manufacturing a positive electrode, the method comprising:

(S1) performing a first rinsing by mixing a first positive electrode active material in distilled water, followed by drying;
(S2) performing a second rinsing by mixing a second positive electrode active material in distilled water, followed drying; and
(S3) forming a positive electrode active material layer including the first positive electrode active material and the second positive electrode active material,
wherein the first rinsing is performed at a higher temperature than the second rinsing,
an average particle diameter $D_{50}$ of the first positive electrode active material is larger than an average particle diameter $D_{50}$ of the second positive electrode active material,
the first positive electrode active material and the second positive electrode active material include single-particle type particles, and
an interface resistance of the positive electrode having an SOC of 50% measured in a coin half-cell manufactured using the positive electrode is $6.5\,\Omega$ to $8.5\,\Omega$, and an interface resistance of the positive electrode having an SOC of 10% measured in a coin half-cell manufactured using the positive electrode is $15\,\Omega$ to $19\,\Omega$.

13. The method according to claim 12, wherein the first rinsing is performed at 20 °C to 40 °C.

14. The method according to claim 12, wherein the second rinsing is performed at 3 °C to 18 °C.

15. The method according to claim 12, wherein the first rinsing is performed by mixing the first positive electrode active material in a content of 50 wt% to 70 wt% based on the total weight of distilled water.

16. The method according to claim 12, wherein the second rinsing is performed by mixing the second positive electrode active material in a content of 65 wt% to 85 wt% based on the total weight of distilled water.

17. The method according to claim 12, wherein the first positive electrode active material includes a first lithium transition metal oxide represented by Formula 1:

(Formula 1)     $Li_{1+a1}Ni_{x1}Co_{y1}Mn_{z1}Al_{w1}M^1_{v1}O_2$

wherein $0 \le a1 \le 0.3$, $0.82 \le x1 < 1.0$, $0 < y1 < 0.18$, $0 < z1 < 0.18$, $0 < w1 < 0.2$, $0 \le v1 \le 0.1$, and
$M^1$ is at least one doping element selected from the group consisting of W, Mo, Cr, Zr, Ti, Mg, Ta and Nb.

18. The method according to claim 12, wherein the second positive electrode active material includes a second lithium transition metal oxide represented by Formula 2:

(Formula 2)     $Li_{1+a2}Ni_{x2}Co_{y2}Mn_{z2}Al_{w2}M^2_{v2}O_2$

wherein $0 \le a2 \le 0.3$, $0.82 \le x2 < 1.0$, $0 < y2 < 0.18$, $0 < z2 < 0.18$, $0 < w2 < 0.2$, $0 \le v2 \le 0.1$, and
$M^2$ is at least one doping element selected from the group consisting of W, Mo, Cr, Zr, Ti, Mg, Ta and Nb.

19. The method according to claim 12, wherein the first positive electrode active material includes a first lithium transition metal oxide, and a first coating layer containing cobalt (Co) on a surface of the first lithium transition metal oxide particles, and
the second positive electrode active material includes a second lithium transition metal oxide, and a second coating layer containing cobalt (Co) on a surface of the second lithium transition metal oxide particles, wherein the first coating layer has a content of cobalt (Co) larger than that in the second coating layer.

20. The method according to claim 19, wherein an amount of cobalt (Co) in the first coating layer is 1.5 mol% to 5 mol%, and an amount of cobalt (Co) in the second coating layer is 0.2 mol% to 2.5 mol%.

[FIG. 1]

```
                    ┌─────────────────┐
                    │      START      │
                    └─────────────────┘
                             │
                             ▼
    ┌──────────────────────────────────────────────┐
    │  performing a first rinsing by mixing a first │
    │  positive electrode active material in        │ ～ S1
    │  distilled water, followed by drying          │
    └──────────────────────────────────────────────┘
                             │
                             ▼
    ┌──────────────────────────────────────────────┐
    │  performing a second rinsing by mixing a      │
    │  second positive electrode active material in │ ～ S2
    │  distilled water, followed drying             │
    └──────────────────────────────────────────────┘
                             │
                             ▼
    ┌──────────────────────────────────────────────┐
    │  forming a positive electrode active material │
    │  layer including the first positive electrode │ ～ S3
    │  active material and the second positive      │
    │  electrode active material                    │
    └──────────────────────────────────────────────┘
                             │
                             ▼
                    ┌─────────────────┐
                    │       END       │
                    └─────────────────┘
```

## INTERNATIONAL SEARCH REPORT

International application No.

**PCT/KR2024/020867**

| A. | CLASSIFICATION OF SUBJECT MATTER |
|---|---|

**H01M 4/131**(2010.01)i; **H01M 4/525**(2010.01)i; **H01M 4/505**(2010.01)i; **H01M 4/36**(2006.01)i; **H01M 10/0525**(2010.01)i; **H01M 4/38**(2006.01)i; **H01M 4/587**(2010.01)i; **H01M 4/1391**(2010.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 4/131(2010.01); H01M 10/052(2010.01); H01M 4/505(2010.01); H01M 4/525(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지(lithium secondary battery), 양극 활물질(cathode active material), 평균 입경(average diameter, D50), 바이모달(bimodal), 단입자(single particle), 계면저항(interfacial resistance), 수세 (washing), 건조(dry)

| C. | DOCUMENTS CONSIDERED TO BE RELEVANT | | |
|---|---|---|---|
| Category* | Citation of document, with indication, where appropriate, of the relevant passages | | Relevant to claim No. |
| A | KR 10-2023-0140433 A (LG ENERGY SOLUTION, LTD.) 06 October 2023 (2023-10-06)<br>See abstract; paragraphs [0078]-[0080], [0105]-[0107], [0111], [0112], [0134] and [0165]; and claims 1-4. | | 1-20 |
| A | KR 10-2022-0045813 A (LG CHEM, LTD.) 13 April 2022 (2022-04-13)<br>See abstract; paragraphs [0014], [0052], [0068] and [0082]-[0085]; and claims 1 and 3. | | 1-20 |
| A | CN 103636038 A (SUMITOMO METAL MINING CO., LTD. et al.) 12 March 2014 (2014-03-12)<br>See abstract; and claims 1-13. | | 1-20 |
| A | KR 10-2017-0076222 A (POSCO et al.) 04 July 2017 (2017-07-04)<br>See abstract; and claims 1-21. | | 1-20 |
| A | JP 2022-167301 A (TORAY IND. INC.) 04 November 2022 (2022-11-04)<br>See abstract; and claims 1-12. | | 1-20 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 March 2025** | **28 March 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/020867**

| Patent document cited in search report | | | Publication date (day/month/year) | Patent family member(s) | | | Publication date (day/month/year) |
|---|---|---|---|---|---|---|---|
| KR | 10-2023-0140433 | A | 06 October 2023 | KR | 10-2651611 | B1 | 27 March 2024 |
| KR | 10-2022-0045813 | A | 13 April 2022 | CN | 115003634 | A | 02 September 2022 |
| | | | | CN | 115003634 | B | 02 April 2024 |
| | | | | EP | 4119503 | A1 | 18 January 2023 |
| | | | | JP | 2023-513521 | A | 31 March 2023 |
| | | | | JP | 7446448 | B2 | 08 March 2024 |
| | | | | KR | 10-2587970 | B1 | 10 October 2023 |
| | | | | US | 2023-0163273 | A1 | 25 May 2023 |
| | | | | WO | 2022-075755 | A1 | 14 April 2022 |
| CN | 103636038 | A | 12 March 2014 | CN | 103636038 | B | 21 December 2016 |
| | | | | JP | 2013-026199 | A | 04 February 2013 |
| | | | | JP | 5894388 | B2 | 30 March 2016 |
| | | | | KR | 10-2014-0039000 | A | 31 March 2014 |
| | | | | KR | 10-2019-0042102 | A | 23 April 2019 |
| | | | | KR | 10-2140969 | B1 | 04 August 2020 |
| | | | | US | 10601038 | B2 | 24 March 2020 |
| | | | | US | 11251428 | B2 | 15 February 2022 |
| | | | | US | 2014-0186709 | A1 | 03 July 2014 |
| | | | | US | 2020-0176773 | A1 | 04 June 2020 |
| | | | | WO | 2013-015007 | A1 | 31 January 2013 |
| KR | 10-2017-0076222 | A | 04 July 2017 | None | | | |
| JP | 2022-167301 | A | 04 November 2022 | None | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230188990

- KR 1020240151560